# EUROPÄISCHE PATENTSCHRIFT

(11) **EP 1 791 436 B1**
(45) Veröffentlichungstag und Bekanntmachung des Hinweises auf die Patenterteilung: **08.10.2014**
(21) Anmeldenummer: 05771373.7
(22) Anmeldetag: 02.08.2005
(51) Int. Cl.: A22C 13/00

(54) **Mehrschichtige Nahrungsmittelhülle mit grobkörnigen Partikeln in einer mittleren Schicht, Verfahren zu ihrer Herstellung, sowie ihre Verwendung als Lebensmittelverpackung.**
Multi-layered food casing comprising coarse-grained particles in a middle layer, method for its production and its use as food packaging.
Enveloppe alimentaire multicouche avec des particules à gros grains dans une couche intermédiaire, procédé pour sa production ainsi que son usage comme emballage alimentaire.

(30) Priorität: 06.08.2004 DE 102004038162
(43) Veröffentlichungstag der Anmeldung: 06.06.2007
(73) Patentinhaber: Kalle GmbH, 65203 Wiesbaden (DE)
(72) Erfinder: STALBERG, Stefanie, 65232 Taunusstein-Wehen (DE); KLEINSCHMIDT, Roland, 65232 Taunusstein (DE); FERON, Bernhard, 65189 Wiesbaden (DE)
(74) Vertreter: Plate, Jürgen
(86) Internationale Anmeldenummer: PCT/EP2005/008346
(87) Internationale Veröffentlichungsnummer: WO 2006/015765

(56) Entgegenhaltungen:
- EP-A- 0 319 732
- WO-A-01/03508
- WO-A-03/073862
- US-A- 5 047 253
- US-A- 5 407 611
- US-A- 5 925 454

## Beschreibung

Die Erfindung betrifft eine schlauchförmige, mehrschichtige, thermoplastische Nahrungsmittelhülle, die eine Außenschicht, eine Innenschicht und mindestens eine dazwischen liegende Schicht umfasst. Sie betrifft ferner ein Verfahren zur Herstellung der Hülle, sowie ihre Verwendung als Lebensmittelverpackung.

Nahrungsmittelhüllen, speziell Wursthüllen, werden traditionell aus Naturdarm, Kollagenfasern, Hautfasern, faserverstärkter Cellulose oder aus Textilien hergestellt. Diese Hüllen haben auf dem Weltmarkt nach wie vor den größten Anteil, insbesondere bei höherwertigen Wurstwaren. An zweiter Stelle folgen die Hüllen aus thermoplastischen Kunststoffen, insbesondere solche aus Polyamid oder aus Polyamid-Polyolefin-Verbundsystemen. Die Mehrzahl der thermoplastischen Hüllen wiederum wird bei der Herstellung streckorientiert, was zu thermischem Schrumpfvermögen und zu besseren mechanischen Eigenschaften führt. Das Aussehen der thermoplastischen Hüllen ist jedoch sehr künstlich. Außerdem sind die thermoplastischen Hüllen üblicherweise so glatt, dass sie den natürlich strukturierten Oberflächen eines Kollagendarms nur wenig ähneln, und außerdem gleiten sie beim Füllen leicht aus der Hand.

Die Kollagen- und Hautfaserdärme werden nach einem sehr aufwendigen und umweltbelastenden Verfahren aus Rinderhäuten hergestellt: Das Hautgewebe wird mit Säuren wie z.B. Milchsäure bis zu den Fibrillen aufgeschlossen; die hochviskose Masse wird extrudiert und mit gasförmigem Ammoniak oder Ammoniumhydroxid langsam und kompakt ausgefällt und verfestigt. Beim Trocknen erfolgt dann eine Vernetzung (Härtung), um den Produkten eine ausreichende Stabilität zu verleihen, so dass sie den Brühprozess ohne wesentlichen Festigkeitsverlust überstehen. Naturdärme wie auch Hautfaserdärme werden jedoch aufgrund verschiedener Vorfälle wie der BSE-Seuche bei Rindern und dem Missbrauch von Antibiotika von den Endverbrauchern zunehmend weniger akzeptiert. Es drohen außerdem gesetzliche Beschränkungen. Eine Alternative zu den genannten Därmen ist daher wünschenswert. Cellulosedärme, selbst solche mit Faserverstärkung, können diese Aufgabe nur eingeschränkt übernehmen. Ihr Herstellverfahren ist nicht weniger aufwendig und umweltschädigend als das Verfahren bei den Kollagen- und Hautfaserdärmen. Nicht essbare Kollagendärme werden als Hautfaserdärme bezeichnet.

Ein großer Vorteil der thermoplastischen Nahrungsmittelhüllen ist ihre einfache, preiswerte Herstellung. Jedoch hat der Endverbraucher vielfach Vorbehalte gegen Würste in diesen Hüllen. Die naturgemäß stark glänzende Oberfläche des Kunststoffs vermittelt oft den Eindruck eines Produktes geringeren Wertes. Der optische Eindruck ließ sich bisher nur dahingehend verbessern, dass sie matt bedruckt wurden, aber noch nicht so, dass eine natürlich wirkende Imitation einer Kollagendarm-, Hautfaserdarm- oder Gellulose-Hülle mit Faserverstärkung gelang. Hinzu kommt die schlechte Griffigkeit der Würste, wenn die Kunststoff-Oberfläche mit Feuchtigkeit oder Fett benetzt ist.

Bei Hüllen aus Naturdarm und insbesondere aus faserverstärkter Cellulose oder Kollagen sorgt die faserige Konsistenz für eine grobkörnig strukturierte, raue Oberfläche. Der Verbraucher, der diese Optik seit vielen Jahrzehnten kennt, assoziiert damit einen höheren Wert bzw. die traditionelle Herstellung des Wurstproduktes.

Aus der DE-A 41 41 292 sind einschichtige, transparente, biaxial orientierte, schlauchförmige Nahrungsmittelhüllen auf Polyamidbasis bekannt, die Feinstpigmente einer Partikelgröße von 0,01 bis 15 µm enthalten. Die Feinstpigmente sollen vor allem eine geringere Verblockungstendenz bewirken.

In der WO 02/00026 sind mehrschichtige, biaxial orientierte, schlauchförmige Kunststoffdärme offenbart, die aus mindestens einer Polyamid und gegebenenfalls Polyolefin enthaltenden Schicht mit darin dispergierten Nanopartikeln mit einem Anteil von 0,1 bis 4 Gew.-% besteht. Bei den Nanopartikeln handelt es sich insbesondere um Schichtsilicate, deren Ausdehnung in keiner Dimension 100 nm überschreitet. Die beschriebene Folie soll eine hohe Transparenz besitzen und als deutlich verbesserte Sauerstoffbarriere wirken.

In der WO 01/03508 ist eine Cellulose-Lebensmittelhülle beschrieben, die auf der Außenseite eine mit einer wässerigen Suspension auf Basis von kationischem Harz und Siliciumoxid aufgebrachte Beschichtung aufweist. Die Partikelgrößen der anorganischen Substanz liegen in der Regel im Bereich von 0,1 bis 25 µm, wobei deren Anteil von 20 bis 83,3 Gew.-% variieren kann.

Hochpermeable Verbundfolien werden in der WO 03/020513 beschrieben. Diese bestehen aus mindestens zwei Schichten: Aus einer Innenschicht, die in der Regel aus Polyolefin und einem anorganischen Füllstoff besteht, und aus einer Außenschicht, die eine Mischung aus mindestens zwei inkompatiblen Polymeren, vorzugsweise ataktisches Polypropylen und low-density Polyethylen bzw. Polystyrol und einen Haftvermittler enthält. Durch die Orientierung dieses Mehrschichtverbundes werden Mikrorisse erzeugt, die für die hohe Permeabilität der Folien verantwortlich sind. Anwendungen dieser Materialien liegen vor allem im Bereich Hygieneartikel, z.B. Babywindeln.

In den aufgeführten Publikationen steht das natürliche Aussehen und die entsprechende Oberflächenbeschaffenheit, d.h. die Nachstellung der besonderen Haptik und Optik eines Kollagendarms, nicht im Vordergrund des Interesses. Die eingebauten anorganischen Substanzen dienen dort vor allem einer besseren Griffigkeit beim Füllprozess insbesondere von Hand, zur Erzeugung einer geringeren Verblockungstendenz der aufgerollten Ware, zur Erzielung einer verbesserten Sauerstoffbarriere bzw. einer besonders hohen Permeabilität oder im Fall organischer Füllstoffe zur Verbesserung der biologischen Abbaubarkeit. Die feinen Partikel ermöglichen auch keine ausreichende Rauheit und Griffigkeit. Außerdem werden zum Teil andere Polymermatrizes bzw. Kombinationen unterschiedlicher Polymere eingesetzt als die in der erfindungsgemäßen Hülle verwendeten Materialien.

In der DE-A 103 45 839 ist eine mehrschichtige Nahrungsmittelhülle beschrieben, bei der in der Außenschicht eine organische Substanz in einer Polymermatrix dispergiert ist. Diese dispergierte Substanz kann in die Masse der Außenschicht in Form von Partikeln und in anderer Form eingebracht worden sein. Es hat sich jedoch gezeigt, dass der Gehalt an grobkörnigen weichen organischen Partikeln in der Masse der Außenschicht bei der Verarbeitung zu Problemen führt, insbesondere zu Ablagerungen an den Werkzeugen wie insbesondere an der Düsenspaltkante am Austritt der Masse aus der Coextrusionsdüse. Außerdem können die weniger temperaturstabilen organischen Bestandteile bei den hohen Extrusionstemperaturen oft etwa im Bereich von 200 bis 280 °C thermisch angegriffen, thermisch zersetzt oder/und verbrannt werden. Vorzugsweise sind die der Masse zugesetzten organischen Substanzen in Bezug auf den Temperaturverlauf des Extrudierverfahrens weitgehend oder gänzlich temperaturstabil. Diese Bestandteile werden ebenfalls oft an den Werkzeugen abgelagert. Diese Ablagerungen führen wie bei einem Gehalt an anorganischen Partikeln zu einem häufigen Anhalten der Fertigung, um die Düsen alle paar Minuten zu reinigen, zum Verwerfen eines oft längeren Hüllenabschnitts und zu Schwankungen des effektiven Durchmessers (Kalibers) beim Extrudieren und somit zu Schwankungen des Durchmessers des extrudierten Stranges.

In der DE-A 10 2004 005 642 sowie in der WO 03/073862 sind mehrschichtige Nahrungsmittelhüllen offenbart, die in der Außenschicht grobkörnige anorganische Partikel enthalten und der Hülle eine hervorragende Mattigkeit und Rauheit verleihen. Es hat sich jedoch gezeigt, dass der Gehalt an grobkörnigen harten anorganischen Partikeln in der Masse der Außenschicht bei der Verarbeitung zu Problemen führt.

Insbesondere führt dies zu Ablagerungen an den Düsen, die Anlass geben zu einer sehr häufigen Reinigung der Düse - gegebenenfalls alle 5 bis 10 Minuten, wobei die Fertigung oft angehalten werden muss - und zu Kaliberschwankungen und somit zu Schwankungen des Strangdurchmessers. Insbesondere bei besonders grobkörnigen anorganischen Partikel können jedoch die Hüllen, die aufgrund dieser Partikel etwas spröder geworden sein können, an diesen Partikeln aufplatzen lassen und sogar ein- bzw. durchreißen.

Die Hartstoffpartikel führen an den metallischen Werkzeugen im Extruder und im Bereich der Düse zu Abrieb, insbesondere an den Kanten, sowie auch zur schnelleren Abnutzung der Werkzeuge wie Messer, die zum Schneiden der Nahrungsmittelhüllen z.B. auf die benötigten Längen benutzt werden und die aufgrund der Hartstoffpartikel an den Oberflächen der Hüllen schneller stumpf werden und ausgetauscht oder nachgeschärft werden müssen.

Auf die nicht vorveröffentlichten Patentanmeldungen DE 103 45 839.5 sowie DE 10 2004 005 642.0 zu ähnlichen, Partikel enthaltenden Nahrungsmittelhüllen wird Bezug genommen hinsichtlich der eingesetzten Substanzen, Partikel und ihrer Größen, ihrer Herstellung und der Eigenschaften der hergestellten Hüllen.

Es bestand daher die Aufgabe, eine mehrschichtige Nahrungsmittelhülle vorzuschlagen, die so gestaltet werden kann, dass sie weitgehend oder gänzlich das Aussehen oder/und die Griffigkeit eines Natur-, Kollagen-, Hautfaser- bzw. faserverstärkten Cellulosedarms, dabei gleichzeitig eine verbesserte Stabilität des Produktionsprozesses und eine geringe Ausschussquote aufweist.

Die Aufgabe wird gelöst durch eine schlauchförmige, mehrschichtige, thermoplastische Nahrungsmittelhülle, die eine Außenschicht (Z), eine Innenschicht (I) und mindestens eine dazwischen liegenden Schicht (P) umfasst, dadurch gekennzeichnet, dass mindestens eine dazwischen liegende Schicht (P) mehr als 50 Gew.-% mindestens eines thermoplastischen Polymers und grobkörnige anorganische oder/und organische Partikel enthält, die mindestens eine Art grobkörniger Partikel mit einem mittleren Äquivalentkugeldurchmesser d₅₀ größer als 5 µm umfasst, und wobei die Oberfläche der Außenschicht (Z) oder/und der Innenschicht (I) eine gemittelte Rauhtiefe R_{z} von mindestens 5 µm aufweist, gemittelt über jeweils 5 Messungen.

Die thermoplastischen Polymere der Schicht (P) sind bevorzugt solche auf Basis von jeweils mindestens einem (Co-)Polyamid, (Co-)Polyester, (Co-)Polyolefin, (Co-)Polyurethan, Polyvinyl-haltigem (Co-)Polymer, deren gemeinsamen Copolymeren oder/und deren Gemischen.

Die Arten der Partikel zeichnen sich durch deutlich unterschiedliche Partikelkollektive aus. Die erste Art der Partikel kann sich z.B. von der zweiten Art insbesondere durch eine unterschiedliche chemische Zusammensetzung, durch eine deutlich unterschiedliche Herstellungsmethode, durch deutlich unterschiedliche Partikelformen oder/und eine deutlich unterschiedliche Partikelgrößenverteilung unterscheiden.

Eine grobkörnige Partikel enthaltende Schicht wird im folgenden als Schicht (P) bezeichnet. Sie grenzt gegebenenfalls direkt an die an der äußeren Oberfläche liegende Außenschicht (Z) an oder/und ist eine der gegebenenfalls weiteren vorhandenen mittleren Schichten. Sie kann auch an die Innenschicht (I) angrenzen, die die innere Oberfläche der Hülle bildet. Die Schicht(en) (P) enthält/enthalten mindestens einen anorganischen oder/und organischen Feststoff in grobkörniger Partikelform. Ein Teil der grobkörnigen Partikel kann gegebenenfalls sogar einen Durchmesser aufweisen, der größer ist als die durchschnittliche Dicke des gesamten Schichtpaketes der Hülle. Dadurch kann sich mindestens ein Teil der grobkörnigen Partikel durch die an die Oberflächen grenzenden Schichten (Z) oder/und (I) drücken oder/und Aufwölbungen insbesondere von jeweils mindestens einer Schicht verursachen, wodurch der Hülle eine große Rauheit verliehen werden kann. Die grobkörnigen Partikel von mindestens einer Schicht (P) weisen vorzugsweise eine solche Verteilung und Häufigkeit auf, dass durchschnittlich mindestens drei Partikel je mm² der äußeren oder/und der inneren Oberfläche einen solchen Durchmesser aufweisen und so in der Hülle eingelagert sind, dass sie zumindest teilweise aus den ebenen Partien der Oberfläche durch Aufwölbungen der Grundmasse um diese Partikel oder/und durch aus der Grundmasse herausstehende Partien der Partikel herausragen. Vorzugsweise sind die grobkörnigen Partikel einer Masse nach dem Extrudieren primär in einer dünnwandigen Schicht der Hülle eingebaut, und das Schichtenpaket wird um die grobkörnigen Partikel herum aufgewölbt.

Hierbei ist es bevorzugt, dass die Außenschicht (Z) und die Innenschicht (I) keine derart grobkörnigen Partikel aufweist. Diese Schichten oder/und mindestens eine der mittleren Schichten können jedoch mattierende partikuläre anorganische oder/und organische Füllstoffe enthalten, die z.B. eine mittlere Partikelgröße oft im Bereich von 0,5 bis 8 µm, vorzugsweise im Bereich von 1 bis 6 µm, besonders bevorzugt im Bereich von 1,5 bis 5 µm aufweisen können. Diese mattierenden Partikel zeigen oft Teilchengrößen, die nicht größer sind als die durchschnittliche Dicke der Außenschicht (Z). Vorzugsweise ist die Partikelgrößenverteilung dieser Mattierungsmittel vergleichsweise schmal, so dass das mindestens eine Mattierungsmittel keine oder fast keine Partikel größer als 8 µm, größer als 10 µm, größer als 13 µm, größer als 16 µm oder größer als 20 µm aufweist. Die Hülle kann auch hierdurch eine stumpfmatte, Kollagendarmähnliche Optik und Haptik sowie eine besonders gute Griffigkeit erhalten. Vorzugsweise enthält mindestens eine Schicht, insbesondere die Außenschicht (Z) oder/und die Innenschicht (I), jeweils mindestens ein Mattierungsmittel.

Die erfindungsgemäße Nahrungsmittelhülle kann insbesondere 3, 4, 5, 6, 7, 8, 9 oder 10 Schichten in Abfolge enthalten. Diese Hülle kann daher in einzelnen Ausführungsformen eine Außenschicht (Z), eine Innenschicht (I) sowie insbesondere ein, zwei, drei, vier, fünf, sechs, sieben oder acht weitere, sogenannte mittlere Schichten aufweisen, von denen mindestens eine dieser mittleren Schichten so hergestellt wird, dass der Masse ein Anteil an grobkörnigen anorganischen oder/und organischen Partikeln zugesetzt wird, der über die weitere Verarbeitung bei der Coextrusion in der aus dieser Masse hergestellten entsprechenden Schicht zumindest teilweise in Partikelform oder im wesentlichen unverändert oder gänzlich unverändert erhalten bleibt. Dies ist die mindestens eine Schicht (P). In bevorzugten Ausführungsformen weist die erfindungsgemäße Hülle neben der Außenschicht (Z) und der Innenschicht (I) insbesondere eine, zwei, drei oder vier weitere Schichten auf, die Funktionsschichten wie z.B. Schichten des Typs (A), (B), (C) oder/und (HV) sind. Die Schichtarten können auch kontinuierliche Übergänge aufweisen, z.B. (B-HV). Die einzelnen Schichten können sich - müssen sich aber nicht - deutlich voneinander abgrenzen. Zwei aneinander grenzende Schichten können fließende Übergänge zeigen oder/und eine unruhig rau wechselnde Grenzfläche zwischen zwei Schichten aufweisen. Vorzugsweise ist die Schicht (P) eine Schicht mit einer Schichtdicke von mindestens 5 µm, von mindestens 10 µm, von mindestens 12,5 µm oder von mindestens 15 µm, besonders bevorzugt von mindestens 17,5 µm, von mindestens 20 µm oder von mindestens 22,5 µm, insbesondere von mindestens 25 µm.

Die Gesamtdicke der Hülle liegt in der Regel im Bereich von 20 bis 300 µm, oft im Bereich von 25 bis 240 µm, vorzugsweise im Bereich von 30 bis 180 µm, besonders bevorzugt größer als 35 oder kleiner als 140 µm oder als 120 µm, ganz besonders bevorzugt größer als 40 oder kleiner als 100 µm oder als 80 µm. Vielfach weisen die erfindungsgemäßen Hüllen eine Gesamtdicke von etwa 42, 44, 46, 48, 50, 52, 54, 56, 58, 60, 62, 64, 66, 68, 70, 72, 74, 76 oder/und 78 µm auf.

Die Nahrungsmittelhülle ist insbesondere im wesentlichen schlauchförmig, vorzugsweise von im wesentlichen kreisförmigem Querschnitt, sowie flexibel. Sie kann insbesondere als Wursthülle, aber auch als Hülle für Molkereiprodukte oder/und andere Nahrungsmittel verwendet werden. Die Nahrungsmittelhülle kann beispielsweise in Form von Abschnitten, von gerafften Raupen, von Naturdärmen wie z.B. Fettenden oder/und in Kranzformen eingesetzt werden.

Gegenüber dem Stand der Technik zeichnet sich die erfindungsgemäße Wursthülle vor allem durch ihr Erscheinungsbild ähnlich einem Kollagendarm, Hautfaserdarm, faserverstärkten Cellulosedarm oder/und Naturdarm aus, das durch einen mehrschichtigen Aufbau insbesondere mit einem erhöhten Gehalt von synthetischen thermoplastischen Polymeren sowie mindestens einer Schicht (P) zwischen der Außenschicht (Z) und der Innenschicht (I) aus sowie durch eine gesteigerte Produktionsstabilität.

Unter thermoplastischen Substanzen im Sinne dieser Anmeldung werden insbesondere solche verstanden, die aus einem wesentlichen Anteil von typisch thermoplastischen Polymeren bestehen. Viele dieser typisch thermoplastischen Polymere weisen oberhalb der Gebrauchstemperatur und unterhalb des Bereiches des Schmelzens einen Fließübergangsbereich auf oder/und - insbesondere bei zumindest teilweise kristallinen Polymeren - einen Schmelzpunkt.

Die mindestens eine grobkörnige Partikel enthaltende Schicht (P) enthält in manchen Ausführungsformen auch anorganische oder/und organische Partikel mit einem Äquivalentkugeldurchmesser größer als 15 µm oder größer als 20 µm, besonders bevorzugt größer als 25 µm, größer als 30 µm, größer als 35 µm oder größer als 40 µm, ganz besonders bevorzugt größer als 45 µm oder größer als 50 µm, insbesondere größer als 55 µm oder größer als 60 µm, vor allem größer als 65 µm oder größer als 70 µm. Es können jedoch in manchen Ausführungsformen auch anorganische oder/und organische Partikel, insbesondere nur organische Partikel, mit einem Äquivalentkugeldurchmesser größer als 75 µm, größer als 80 µm, größer als 85 µm, größer als 90 µm, größer als 95 µm oder größer als 100 µm auftreten. Vorzugsweise ist die Partikelgrößenverteilung der grobkörnigen Partikel durchschnittlich breit oder besonders breit, um einen Anteil außerordentlich grobkörniger Partikel aufzuweisen. Vorzugsweise weist die Gesamtheit der anorganischen oder/und organischen Partikel von mindestens einer Schicht (P) oder zumindest ihre im wesentlichen isometrisch geformten Partikel eine Äquivalentkugeldurchmesserverteilung mindestens teilweise im Bereich zwischen 20 und 40 µm auf. Insbesondere enthält mindestens eine Schicht (P) mindestens 0,5 Gew.-% anorganische oder/und organische Partikel, besonders bevorzugt mindestens 0,8 oder mindestens 1,2 Gew.-%, ganz besonders bevorzugt mindestens 1,6 oder mindestens 2 Gew.-%.

Als anorganische partikuläre Substanzen, die insbesondere einer Schicht (P) der Hülle vorteilhaft zugegeben werden können, eignen sich unter anderem:
1. Fasern aus Glas wie z.B. Glasfasern, Glasfilamente oder/und Glas stapelfasern;
2. Kurzfasern aus Steinwolle wie z.B. aus Basaltwolle, Schlackenwolle oder/und Mineralwollfasern;
3. Füllstoffe bzw. Verstärkungsmaterialien aus Carbonat(en) wie z.B. aus Kreide, Kalksteinmehl, Calcit, gefälltem Calciumcarbonat, Magnesiumcarbonat, Bariumcarbonat, Dolomit oder/und anderen Mischcarbonaten;
4. Sulfate wie z.B. Bariumsulfat oder/und Calciumsulfat;
5. Silicate wie z.B. Talk, Pyrophyllit, Chlorite, Hornblenden, Glimmer, Kaoline, Tone, Wollastonit, Gesteinsmehl wie z.B. Schiefermehl, gefällte oder/und natürliche Alkali-haltige oder/und Erdalkali-haltige Silicate, Silicate mit mehreren Kationen wie z.B. MgFe-, AlMg-, CaAl-, NaAl- bzw. KAl-Silicate, Feldspäte, Feldspatvertreter, Mullite, Zeolithe oder/und Erdalkali-Metasilicate;
6. Kieselsäuren von unterschiedlicher Art wie z.B. Quarz, Quarzgut, Cristobalit, Erden oder/und Mahlgüter von Stoffen mit sehr hohem SiO₂-Gehalt wie z.B. Kieselgur oder/und Neuburger Kieselerde, gefällte bzw. pyrogene Kieselsäure, Glasmehl, Bimsmehl, Perlit, feingemahlene Fritten oder/und (Mikro-)Glaskugeln oder/und Aluminiumsilicatkugeln als Vollkugeln, Hohlkugeln oder/und deren Fragmenten;
7. Oxide wie z.B. Aluminiumhydroxide, Aluminiumoxide, Magnesiumhydroxid, Magnesiumoxid, Titandioxide, Siliciumdioxide oder/und
8. weitere wie z.B. Kohlenstofffasern, Ruß- oder/und Graphitpartikel.

Insbesondere bestehen die anorganischen Partikel vorwiegend oder weitgehend aus Partikeln auf Basis von Aluminiumoxid, Carbonat, Phosphat, Siliciumoxid, Silicat wie z.B. Wollastonit, Sulfat, Gestein oder/und glasartiger Substanz.

Die Oberfläche insbesondere der anorganischen Partikel kann z.B. mit einem Haftvermittler modifiziert sein, so dass eine höhere Verträglichkeit mit der umgebenden Polymermatrix (= Grundmasse, Matrix) erzielt werden kann, oder farblich beschichtet sein. In der polymeren Matrix können an den anorganischen oder/und organischen Partikeln gegebenenfalls Hohlräume auftreten, insbesondere durch das Verstrecken.

Die größeren anorganischen oder/und organischen Partikel in einer Schicht (P) sind insbesondere förderlich für die Rauhigkeit und Griffigkeit der Hülle. Ein Anteil an mittelgroßen oder/und feineren anorganischen oder/und organischen Partikeln kann insbesondere für die Verstärkung des matten Aussehens und die Erzeugung einer Feinstruktur dienen. Hierbei kann ein Gemisch mit unterschiedlichen Partikelformen vorliegen. Der Anteil der größeren Partikel von primär zweidimensionaler Erstreckung wie z.B. Plättchen ist vorzugsweise gering oder (praktisch bei) Null.

In manchen Ausführungsformen ist wenigstens ein Teil der anorganischen Partikel vorzugsweise von im wesentlichen isometrischer, linealartiger, nadeliger oder/und faseriger Form. Es ist dann u.U. bevorzugt, dass die meisten der eingesetzten Partikel, insbesondere die größeren, vorzugsweise eine derartige Form aufweisen. Vorzugsweise wird eine Mischung aus anorganischen Partikeln eingesetzt, die sowohl im wesentlichen isometrische Partikel und im wesentlichen linealartige, nadelige oder/und faserige Partikel aufweist, insbesondere in einem Verhältnis im Bereich von 5 : 95 bis 95 : 5, vorzugsweise im Bereich von 15 : 85 bis 85 : 15, besonders bevorzugt mehr als 25 : 75 oder mehr als 35 : 65 bzw. weniger als 75 : 25 bzw. weniger als 65 : 35, ganz besonders bevorzugt etwa 45 : 55 oder etwa 55 : 45. Letztere können teilweise oder gänzlich, etwas oder stark ausgerichtet sein. Letztere können aber auch bevorzugt irregulär in einer Schicht (P) enthalten sein, um keine Vorzugsrichtung erkennen zu lassen. Je größer die anorganischen Partikel von mittlerer oder hoher Härte sind, desto eher ist es bevorzugt, dass die besonders großen Partikel verrundet sind.

Die Partikel in einer Schicht (P), vor allem solche in Form von Fasern oder/und im wesentlichen isometrische, nadelige oder/und plättchenförmige Partikel, verleihen der Hülle eine sehr natürliche seidenmatte Optik und eine gut griffige Haptik. Die Oberfläche erhält dadurch eine leichte Rauhigkeit, die über die Art, Menge und Größenverteilung der Partikel eingestellt werden kann. Über diesen Partikelanteil kann zudem die Ringelfähigkeit der Hülle beeinflußt werden. Ferner wurde gefunden, dass die anorganischen Partikel als Verstärkungsmittel wirken können, wodurch die Kaliberstabilität des gefüllten Materials (Variation der Durchmesser) gegenüber dem ungefüllten deutlich erhöht ist.

Das Gewichtsverhältnis zwischen anorganischen oder/und organischen Partikeln und Kunststoffen in der gesamten Nahrungsmittelhülle beträgt vorzugsweise 0,01 : 99,99 bis zu 40 : 60, besonders bevorzugt mindestens 0,05 : 99,95 bzw. bis zu 30 : 70, ganz besonders bevorzugt mindestens 0,1 : 99,9 bzw. bis zu 20 : 80, insbesondere mindestens 0,3 : 99,7 oder mindestens 0,5 : 99,5 bzw. bis zu 16 : 84, bis zu 12 : 88 oder bis zu 8 : 92, vor allem mindestens 0,8 : 99,2 oder mindestens 1 : 99 bzw. bis zu 6 : 94 oder sogar bis zu 4 : 96.

Das Gewichtsverhältnis zwischen allen anorganischen oder/und organischen Partikeln bzw. Kunststoffen in einer Schicht (P) oder/und in einer weiteren, gröbere Partikel enthaltenden Schicht - jeweils bezogen auf eine Schicht - beträgt vorzugsweise 0,1 : 99,9 bis zu 50 : 50, besonders bevorzugt mindestens 0,3 : 99,7 bzw. bis zu 40 : 60, ganz besonders bevorzugt mindestens 0,5 : 99,5 bzw. bis zu 30 : 70, insbesondere mindestens 0,75 : 99,25 oder mindestens 1 : 99 bzw. bis zu 25 : 75 oder bis zu 20 : 80, vor allem mindestens 1,5 : 98,5 oder mindestens 2 : 98 bzw. bis zu 15 : 85 oder sogar bis zu 10 : 90.

Eine Schicht (P) kann anstelle oder zusätzlich zu den anorganischen Partikeln noch mindestens eine Art organischer Partikel enthalten.

Die organischen Partikel sind vorzugsweise solche auf Basis von Polysacchariden, Proteinen, hochtemperaturstabilen Kunststoffen wie u.a. für Materialien wie sie zumindest chemisch ähnlich auch für Kunstfasern verwendet werden und deren Gemischen. Sie bestehen vorzugsweise vorwiegend oder weitgehend aus Partikeln auf Basis von Polysacchariden, Proteinen oder/und hochtemperaturstabilen Kunststoffen. Sie sind vorzugsweise ausgewählt aus ausreichend hochtemperaturstabilen organischen Materialien: Aus organischen Materialien mit erhöhtem Schmelzpunkt, aus organischen Materialien mit erhöhtem Erweichungspunkt oder/und aus organischen Materialien mit erhöhtem Zersetzungspunkt, insbesondere mit einem Schmelzpunkt oder/und mit einem Zersetzungspunkt größer als 140 °C, größer als 160 °C, größer als 180 °C, größer als 200 °C, größer als 220°C, größer als 240 °C, größer als 260 °C oder/und größer als 280 °C oder/und mit einem Erweichungspunkt größer als 180 °C, größer als 200 °C, größer als 220 °C oder/und größer als 240 °C. Die Temperaturstabilität für das gewählte Herstellverfahren bzw. die gewählten organischen Substanzen zeigt sich auch daran, dass gegebenenfalls ein Teil der organischen Substanz(en) angebrannt, verbrannt oder/und anderweitig zersetzt wird. Diese Zersetzungserscheinungen werden oft an ihrer hell- oder/und dunkelbraunen Farbe erkannt. Während beispielsweise Alginate und Carrageenan recht temperaturempfindlich sind, ist Guarkernmehl etwas weniger temperaturempfindlich, ist Stärkepulver in der Regel noch weniger temperaturempfindlich und ist Cellulose von diesen Substanzen am temperaturstabilsten. Daher empfehlen sich unter den vielen Arten von organischen Partikeln, die der Masse von mindestens einer Schicht zugesetzt werden können, aus Gründen der Temperaturstabilität Partikel von Cellulose oder/und Stärke. Besonders bevorzugt sind Massen bzw. Schichten mit einem Gehalt an mindestens einem Kunststoff für die Matrix auf Basis von Polyamid oder/und mit einem Gehalt an mindestens einem Polyamid sowie mit Partikeln auf Basis von mindestens einem Polysaccharid, zumal diese Materialien einen höheren Anteil an polaren Bindungen enthalten.

Die erfindungsgemäß mit anorganischen oder/und organischen Partikeln modifizierte Schicht (P) bildet aufgrund der Größe einiger Partikel bzw. aufgrund großer Agglomerate oder/und Aggregate während der Herstellung des Folien-schlauches ebenfalls überaus raue, matte Oberflächen der Außenschicht (Z) oder/und der Innenschicht (I) aus, welche in optischer sowie haptischer Hinsicht den Oberflächen z.B. von Cellulose-Faserhüllen oder Kollagenhüllen nahe kommen können. Dieser Eindruck kann noch verstärkt werden, wenn in die Außenschicht (Z) oder/und in die Innenschicht (I) Mattierungsmittel wie z.B. anorganische oder/und organische Partikel mit einer mittleren Partikelgröße pro Schicht oder pro Partikelart im Bereich von 0,5 bis 8 µm eingelagert wird. Die Schicht (P) oder/und mindestens eine andere Schicht kann hierbei auch ein Blend enthalten von jeweils mindestens einem Polysaccharid, einem Protein oder/und einem hochtemperaturstabilen Kunststoff insbesondere in Form von Fasern oder/und im wesentlichen isometrischen oder/und nadeligen Partikeln, besonders bevorzugt von jeweils mehr oder minder isometrischen, irregulären, verrundeten oder/und eckigen Partikeln.

Es kann mindestens ein Polysaccharid in mindestens einer Schicht eingesetzt werden in Form zugesetzter Partikel oder/und in der Matrix. Das verwendete mindestens eine Polysaccharid kann natürlichen Ursprungs oder/und chemisch derivatisiert sein. Es kann verzweigt, vernetzt oder/und linear aufgebaut sein. Geeignete Polysaccharide sind insbesondere native, thermoplastische Stärke (TPS) oder/und Stärkederivate. Im Bereich der nicht derivatisierten Stärken ist native oder/und thermoplastifizierte Mais- oder/und Kartoffelstärke bevorzugt. Stärkederivate sind beispielsweise Stärkeester wie Stärkeacetate, -maleate, -propionate, -butyrate, -lauroate oder/und -oleate, Stärkexanthogenate, Stärkephosphate, Stärkesulfate, Stärkenitrate, Stärkeether wie Stärkemethylether, - ethylether, -propylether, -butylether, -alkenylether, -hydroxyethylether oder/und - hydroxypropylether, gepfropfte Stärken wie mit Maleinsäure- oder/und Bernsteinsäureanhydrid gepfropfte Stärken oder/und oxidierte Stärken wie Dialdehydstärke, Carboxystärke oder/und mit Persulfat abgebaute Stärke.

Alternativ zu oder in Kombination mit mindestens einer der oben aufgeführten Stärken bzw. Stärkederivate können überdies andere Komponenten aus der Familie der Polysaccharide enthalten sein. In Frage kommen hier insbesondere pflanzliche Pulver, Fasern oder Faserabschnitte wie z.B. solche aus Cellulose, Baumwolle, Kapok, Flachs, Leinen, Hanf, Jute, Kenaf, Ramie, Sisal, Torf, Stroh, Weizen, Kartoffeln, Tomaten, Karotten, Kokos, Ananas, Äpfeln, Orangen, Fichte, Kiefer oder/und Kork. Fasern und ihre längeren oder kürzeren Abschnitte werden im folgenden nur als "Fasern" bezeichnet.

Darüber hinaus kommen auch organische, synthetische, insbesondere hochtemperaturstabile oder/und hochschmelzende Kunstfasern bzw. Kunststoffpulver in Form zugesetzter Partikel oder/und in der Matrix in Frage wie z.B. auf Basis von Polyethylen, Polypropylen, Polyamid, Polyacrylonitril, Polyester, Fluorpolymer, Polysulfon, Polyethersulfon, Polyetherketon, Polyphenlyensulfid, Polyaramid, Polyimid, aromatischem Polyester, Polychinoxalin, Polychinolin, Polybenzimidazol oder/und Leiterpolymer.

Derartige Fasern oder/und Pulver (zusammen Partikel genannt) besitzen in der Regel deutlich höhere Schmelzpunkte, deutlich höhere Erweichungspunkte oder/und deutlich höhere Zersetzungspunkte als die sie in der Nahrungsmittelhülle umgebende Polymermatrix, so dass diese unter den Verarbeitungs-bedingungen nicht oder nur teilweise aufschmelzen oder/und mit höherer Viskosität erweichen bzw. aufschmelzen als die umgebende Polymermatrix und gegebenenfalls z.B. als sogenannte Stippen in der Folie sichtbar bleiben können. Solche organischen Komponenten haben sich daher ebenfalls als sehr wirksam für die Erzeugung einer rauen, strukturierten Oberfläche erwiesen.

Insbesondere mindestens eine Schicht kann darüber hinaus noch mindestens einen weiteren hoch- oder/und niedrigmolekularen Bestandteil wie z.B. mindestens eine weichmachende Stubstanz wie Glycerin, Polyethylenglykol, Glycerincarbonsäureester, Phthalsäureester, Stabilisator, bakterizide Substanz, fungizide Substanz oder/und mindestens ein weiteres sonstiges Additiv enthalten.

Als Kunststoffkomponente(n) vorzugsweise in mindestens einer Schicht der Hülle, besonders bevorzugt in der Schicht (P), insbesondere für die Matrix der Masse bzw. der Schicht sind prinzipiell alle thermoplastischen Polymere geeignet wie z.B. Polyurethane, Polyetherurethane, Polyesteretherurethane, Polystyrole, aliphatische (Co-)Polyamide, Polyolefine wie Polyethylene oder/und Polypropylene, Copolymere aus Ethylen, Propylen oder/und α-Olefinen, aliphatische oder/und teilaromatische (Co-)Polyester, Vinylcopolymere wie z.B. Ethylen-Vinylacetat-Copolymere, Polyvinylalkohole, deren Copolymere oder/und deren Gemische. Unter den Polyurethanen sind hierfür Polyaddukte, die z.B. unter Reaktion von Toluylendiisocyanat (TDI), Isophorondiisocyanat oder/und Hexamethylendiisocyanat mit Poly-1,2-propandiol (Polypropylenglykol, PPG) oder/und Poly-1,4-butandiol (Polytetramethylenglykol, PTMG) hergestellt wurden, bevorzugt. Unter den Polyamiden sind hierfür PA6, PA66, PA12, PA6/66 oder/und PA6/12 besonders geeignet. Unter den Polyestern sind hierfür Polylactid, Polycaprolacton, Copolymere von aliphatischen Diolen mit aliphatischen Dicarbonsäuren und Terephthalsäure sowie Poly(butylenglykoltere-phthalat) besonders bevorzugt. Vielfach enthält die Zusammensetzung dieser mindestens einen Schicht, insbesondere der Schicht (P), ein Gemisch mit einer oder mit mindestens zwei dieser thermoplastischen Polymere.

Der Anteil an thermoplastischen Bestandteilen kann insbesondere in mindestens einer Schicht wie insbesondere der tragenden Schicht größer sein als 50 Gew.-%, vorzugsweise größer als 55 oder als 60 Gew.-%, besonders bevorzugt größer als 65 oder als 70 Gew.-%, gegebenenfalls sogar größer als 75, 80 oder 85 Gew.-%, speziell auf Basis von mindestens einem (Co-)Polyamid und gegebenenfalls von jeweils mindestens einem weiteren Polymer oder/und Copolymer.

Mindestens eine Schicht kann darüber hinaus auch mindestens eine weitere organische Substanz wie z.B. auf Basis von Kohlenhydraten, insbesondere Stärken, oder/und Proteinen oder/und gegebenenfalls Additiven enthalten wie z.B. weitere hoch- oder/und niedrigmolekulare Bestandteile wie z.B. weichmachende Substanzen wie Glycerin, Polyethylenglykole, Glycerincarbonsäureester, Phthalsäureester bzw. Stabilisatoren bakterizide oder/und fungizide Substanzen. Vorzugsweise werden organische Partikel mit mindestens einem Plastifizierungsmittel zumindest teilweise plastifiziert und somit zumindest teilweise thermoplastisch gemacht, so dass die organischen Partikel zumindest teilweise mit mindestens einer Substanz der Grundmasse eine Mischphase bilden und dabei angelöst oder/und zumindest teilweise aufgelöst werden.

Die Farbe und die Farbvariation der coextrudierten Nahrungsmittelhüllen kann durch Zusatz von anorganischen oder/und organischen Farbstoffen oder/und anorganischen oder/und organischen Farbpigmenten, die im Sinne dieser Anmeldung zu den Partikeln gezählt werden, zu einer beliebigen Schicht oder/und beliebigen Schichten, insbesondere der Schicht (P), eingestellt werden und z.B. durch unterschiedliche Mengen und unterschiedliche Homogenität bzw. Strukturierung variiert werden.

Alle oder fast alle Schichten der Nahrungsmittelhülle sind vorzugsweise homogen oder im wesentlichen homogen aufgebaut oder im wesentlichen homogen, wenn von der Verteilung der anorganischen oder/und organischen Partikel oder/und von der Verteilung der anorganischen oder/und organischen Farbstoffe oder/und von Farbunterschieden abgesehen wird. Innerhalb der Matrix kann oft eine mehr oder weniger gleichmäßige Verteilung der nicht miteinander vermischten organischen Substanzen oder/und der Partikel vorliegen. Wenn die organischen Substanzen der Matrix und gegebenenfalls auch der organischen Partikel unterschiedliche chemische Eigenschaften aufweisen und daher schlecht miteinander verträglich sind, werden sie sich oft nicht oder nicht vollständig mischen und ein mehrphasiges Gemisch bilden, das eine Art einer "körnigen" Struktur aus mindestens zwei Phasen bildet. Falls jedoch die chemischen Eigenschaften von einzelnen oder allen organischen Substanzen recht oder sehr ähnlich sind, können sie auch eine gemeinsame Mischphase bilden. Hierbei können u.U. sogar organische Partikel wie z.B. plastifizierte und dabei thermoplastisch gewordene Stärkepartikel im Kontakt mit einigen anderen thermoplastischen organischen Substanzen teilweise bzw. vollständig aufgelöst werden und dabei eine Mischphase bilden.

Eine Schicht, die mindestens zwei anorganische oder/und organische Phasen aufweist, bei der die einzelnen Substanzen der Matrix und der gegebenenfalls enthaltenen Partikel, soweit sie nicht während des Herstellungsprozesses mindestens eine Mischphase ausgebildet haben, jeweils eine gesonderte Phase darstellen, kann, wenn die "körnige" Struktur feinkörnig ist und wenn die verschiedenen Phasen gegebenenfalls einschließlich der vorhandenen Partikel, unterschiedliche optische Eigenschaften aufweisen, vor allem unterschiedliche Brechungsindizes aufweisen. Dann kann die Schicht auch aufgrund der verschiedenen optischen Eigenschaften einen matten Eindruck aufweisen, der nicht durch Unebenheiten der Oberfläche und nicht durch Porenräume bedingt sein muss, aber durch diese verstärkt werden kann. Je mehr optisch wirksame Grenzflächen auftreten und je unterschiedlicher die optischen Eigenschaften wie die Brechungsindizes sind, desto matter kann dieser Eindruck sein.

Mindestens eine Schicht (P) enthält vorzugsweise mindestens 0,05 Vol.-% oder mindestens 0,2 Vol.-% anorganische oder/und organische Partikel mit einem Äquivalenzkugeldurchmesser von mindestens 10 µm oder/und mit einem Partikelvolumen von mindestens 524 µm³, bzw. von mindestens 15 µm oder/und mit einem Partikelvolumen von mindestens 1767 µm³, besonders bevorzugt mindestens 0,05 Vol.-% oder mindestens 0,2 Vol.-% anorganische oder/und organische Partikel mit einem Äquivalenzkugeldurchmesser von mindestens 20 µm bzw. mit einem Partikelvolumen von mindestens 4189 µm³ bzw. mindestens 0,05 Vol.-% oder mindestens 0,2 Vol.-% anorganische oder/und organische Partikel mit einem Äquivalenzkugeldurchmesser von mindestens 25 µm bzw. mit einem Partikelvolumen von mindestens 8181 µm³ bzw. mindestens 0,05 Vol.-% oder mindestens 0,2 Vol.-% anorganische oder/und organische Partikel mit einem Äquivalenzkugeldurchmesser von mindestens 30 µm bzw. mit einem Partikelvolumen von mindestens 14137 µm³, ganz besonders bevorzugt mindestens 0,05 Vol.-% oder mindestens 0,2 Vol.-% anorganische oder/und organische Partikel mit einem Äquivalenzkugeldurchmesser von mindestens 40 µm bzw. mit einem Partikelvolumen von mindestens 33510 µm³ oder mindestens 0,05 Vol.-% oder mindestens 0,2 Vol.-% anorganische oder/und organische Partikel mit einem Äquivalenzkugeldurchmesser von mindestens 45 µm bzw. mit einem Partikelvolumen von mindestens 47713 µm³, insbesondere mindestens 0,05 Vol.-% oder mindestens 0,2 Vol.-% anorganische oder/und organische Partikel mit einem Äquivalenzkugeldurchmesser von mindestens 50 µm bzw. mit einem Partikelvolumen von mindestens 65450 µm³ oder mindestens 0,05 Vol.-% oder mindestens 0,2 Vol.-% anorganische oder/und organische Partikel mit einem Äquivalenzkugeldurchmesser von mindestens 55 µm bzw. mit einem Partikelvolumen von mindestens 87114 µm³, vor allem mindestens 0,05 Vol.-% oder mindestens 0,2 Vol.-% anorganische oder/und organische Partikel mit einem Äquivalenzkugeldurchmesser von mindestens 60 µm bzw. mit einem Partikelvolumen von mindestens 113097 µm³ oder mindestens 0,05 Vol.-% oder mindestens 0,2 Vol.-% anorganische oder/und organische Partikel mit einem Äquivalenzkugeldurchmesser von mindestens 70 µm bzw. mit einem Partikel-volumen von mindestens 179594 µm³.

Bei der erfindungsgemäßen Hülle kann die Gesamtheit der anorganischen oder/und organischen Partikel von mindestens einer Schicht (P) oder können zumindest ihre im wesentlichen isometrisch geformten Partikel eine Äquivalent-kugeldurchmesserverteilung vorzugsweise mindestens im Bereich zwischen 20 und 60 µm aufweisen, besonders bevorzugt im Bereich zwischen 25 und 70 µm, zwischen 30 und 80 µm oder zwischen 40 und 90 µm, ganz besonders bevorzugt im Bereich zwischen 50 und 100 µm, zwischen 60 und 110 µm oder zwischen 70 und 120 µm. Neben dem gewählten, hier genannten Bereich können darüber hinaus insbesondere auch feinere als die genannten Partikelgrößen vorhanden sein.

Die Gesamtheit der anorganischen oder/und organischen Partikel von mindestens einer Schicht (P) enthält bei einem Teil der Ausführungsformen vorzugsweise zu mindestens 10 Vol.-% des Volumens aller anorganischen oder/und organischen Partikel im wesentlichen isometrisch geformte Partikel, besonders bevorzugt zu mindestens 30 Vol.-%, ganz besonders bevorzugt zu mindestens 50 Vol.-%, insbesondere zu mindestens 70 Vol.-%.

Die Gesamtheit der anorganischen oder/und organischen Partikel von mindestens einer Schicht (P) kann bei einzelnen Ausführungsformen - soweit derartige Partikelformen in gewissem Umfang enthalten sind - vorzugsweise zu mindestens 2 Vol.-% des Volumens aller Partikel im wesentlichen faserig, nadelig oder linealförmig geformte Partikel enthalten, besonders bevorzugt zu mindestens 5 Vol.-%, ganz besonders bevorzugt zu mindestens 10 Vol.-%, insbesondere zu mindestens 20 oder mindestens Vol.-%.

Mindestens eine Schicht (P) enthält vorzugsweise mindestens 0,5 Gew.-% Partikel ausgewählt aus anorganischen oder/und organischen Partikeln, besonders bevorzugt mindestens 1, 2 oder 4 Gew.-%, ganz besonders bevorzugt mindestens 8, 10, 13 oder 18 Gew.-%, insbesondere mindestens 20, 24 oder 28 Gew.-%, vor allem mindestens 32 oder mindestens 36 Gew.-%.

Falls jedoch ein Anteil an Fasern der Zusammensetzung der Außenschicht (Z) oder/und einer anderen Schicht zugesetzt ist, enthält diese bei einem Teil der Ausführungsformen vorzugsweise mindestens 0,1 Gew.-% faseriger anorganischer Partikel, besonders bevorzugt mindestens 0,5 Gew.-%, ganz besonders bevorzugt mindestens 1, 2 oder 4 Gew.-%, insbesondere mindestens 6, 10 oder 15 Gew.-%, vor allem mindestens 20 Gew.-%.

Um den haptischen Eindruck von Natur-, Kollagen-, Hautfaser- bzw. faserverstärkten Cellulosedärmen zu erzielen, werden vorzugsweise folgende jeweils über mindestens 5 Messungen gemittelte Rauheitswerte der Außenschichtoberfläche eingestellt:
Rₐ ≥ 0,8 µm, besonders bevorzugt Rₐ ≥ 1,0 µm, ganz besonders bevorzugt Rₐ ≥ 1,2 µm, insbesondere Rₐ ≥ 1,4 µm, vor allem Rₐ ≥ 1,6 µm oder/und
R_{z} ≥ 5,0 µm, besonders bevorzugt R_{z} ≥ 6,0 µm, ganz besonders bevorzugt R_{z} ≥ 7,0 µm, insbesondere R_{z} ≥ 8,0 µm, vor allem R_{z} ≥ 9,0 µm oder/und
Rₘₐₓ ≥ 6,0 µm, besonders bevorzugt Rₘₐₓ ≥ 7,5 µm, ganz besonders bevorzugt Rₘₐₓ ≥ 9 µm, insbesondere Rₘₐₓ ≥ 10,5 µm, vor allem Rₘₐₓ ≥ 12 µm.

Insbesondere liegen die gemittelten Rauheitswerte bei Rₐ ≥ 1,8 µm, Rₐ ≤ 5,0 µm, R_{z} ≥ 10 µm, R_{z} ≤ 35 µm, Rₘₐₓ ≥ 13 µm oder/und Rₘₐₓ ≤ 45 µm. Vor allem liegen die gemittelten Rauheitswerte Rₐ bei etwa 2, 2,2, 2,4, 2,6, 2,8, 3,0 3,2, 3,4, 3,6, 3,8, 4, 4,2, 4,4, 4,6 oder 4,8 µm, R_{z} bei etwa 11, 12, 13, 14, 15, 16, 17, 19, 21, 23, 25, 27, 29, 31 oder 33 µm oder/und Rₘₐₓ bei etwa 14, 15, 16, 17, 18, 19, 20, 21, 23, 25, 27) 29, 31, 33, 35, 37, 39, 41 oder 43 µm.

Um den optischen Eindruck von Natur-, Kollagen-, Hautfaser- bzw. faserverstärkten Cellulosedärmen zu erzielen, sollten vorzugsweise folgende jeweils über mindestens 5 Messungen gemittelte Glanzwerte der Außenschichtoberfläche eingestellt werden, die bei einem Einstrahlwinkel von 60 ° gemessen werden:

Insbesondere weist die Oberfläche der Außenschicht (Z) einen Glanzwert gemessen mit einem Gerät Micro Gloss 60 der Fa. BYK Gardner gemittelt über 5 Messungen von nicht mehr als 65 auf. Die gemittelten Glanzwerte liegen vorzugsweise bei ≤ 65, besonders bevorzugt ≤ 55, ganz besonders bevorzugt ≤ 45, insbesondere ≤ 35, vor allem ≤ 25. Je geringer die Glanzwerte sind, desto matter wirkt die Außenschicht (Z) oder/und die Innenschicht (I), wobei die Ursachen dieses Eindrucks nicht oder nicht nur bei Bestandteilen dieser Schicht(en) liegen müssen, aber können. Insbesondere liegen die gemittelten Glanzwerte bei ≥ 0,5, ≥ 2, ≥ 4, ≥ 6 oder ≥ 8 bzw. bei ≤ 22, ≤ 20, ≤ 18, ≤ 16 oder ≤ 14. Vor allem liegen sie bei etwa 1, 3, 5, 7, 9, 11, 13, 15, 17, 19 oder 21.

Die Reißfestigkeit der erfindungsgemäßen Hüllen (an trockenen Proben gemessen) liegt vorzugsweise bei mindestens 20, 30 oder 40 N/mm², besonders bevorzugt bei mindestens 50 oder 60 N/mm², ganz besonders bevorzugt bei mindestens 70 oder 80 N/mm², insbesondere bei mindestens 90 oder 100 N/mm².

Die Reißdehnung der erfindungsgemäßen Hüllen (an trockenen Proben gemessen) liegt vorzugsweise bei mindestens 30, 40, 50 oder 60 %, besonders bevorzugt bei mindestens 70 oder 80 %, ganz besonders bevorzugt bei mindestens 90 oder 100 %, insbesondere bei mindestens 110 oder 120 %.

Vorzugsweise weist mindestens eine Schicht außer oder gleichzeitig mit der Außenschicht (Z) die Kunststoff-typischen, mechanischen Eigenschaften der Hülle wie z.B. hohe Reißfestigkeit oder/und hohe Elastizität auf. Diese mindestens eine Schicht ist vielfach als tragende Schicht der Hülle von Bedeutung. Die mindestens eine tragende Schicht der Hülle sollte möglichst unversehrt hergestellt sein und sollte möglichst wenige oder gar keine Partikel oder nur kleine Partikel aufweisen, da diese die mechanischen Eigenschaften der Hülle meistens etwas herabsetzen. Deswegen wird eine Schicht (P) nur selten auch eine tragende Schicht sein können. Eine tragende Schicht hat vorzugsweise eine Schichtdicke von mindestens 15 µm, besonders bevorzugt von mindestens 18 µm, ganz besonders bevorzugt von mindestens 22 µm. Gegebenenfalls sorgt mindestens eine Schicht neben der Außenschicht (Z) für eine hohe Gas- und Wasserdampfdichtigkeit. In einzelnen Ausführungsformen kann auch die Außenschicht (Z) eine hohe Gas- und Wasserdampfdichtigkeit zeigen.

Mindestens eine weitere Schicht neben der Schicht (P) enthält bevorzugt mindestens einen Kunststoff auf Basis von (Co-)Polyamid, Polyolefin, Ethylen-Vinylalkohol-Copolymer (EVOH), Vinylidenchlorid-(Co-)Polymer oder/und (Co-)Polymerisate mit Haftvermittler-Eigenschaften. Besonders bevorzugt ist, dass mindestens eine der Schichten der Hülle einen Anteil auf Basis von (Co-)Polyamid von mindestens 50 Gew.-% bezogen auf diese Schicht oder von mindestens 55 Gew.-% oder von mindestens 60 Gew.-% aufweist, ganz besonders bevorzugt mindestens 65 Gew.-% oder mindestens 70 Gew.-% oder mindestens 75 Gew.-%, ganz besonders bevorzugt mindestens 80 Gew.-% oder mindestens 85 Gew.-% oder mindestens 90 Gew.-%, insbesondere mindestens 95 Gew.-% oder mindestens 98 Gew.-% oder sogar etwa 100 Gew.-%. Diese Schicht kann auch die Außenschicht (Z) sein und kann gegebenenfalls auch reich an (Co-)Polyamid sein. Es ist jedoch oft bevorzugt, dass eine andere Schicht als die Außenschicht (Z) oder/und als die mindestens eine Schicht (P) die Funktionen und die Zusammensetzung der Schicht (A) aufweist. Die Schichten (P) sind in vielen Ausführungsformen allein schon wegen ihres Gehalts an vergleichsweise großen anorganischen oder/und organischen Partikeln keine tragenden Schichten, da sie die entsprechenden Eigenschaften vielfach nicht erreichen oder da sie nicht dick genug sind.

Die (Co-)Polyamid-reicheren Schichten (nachfolgend mit "A" abgekürzt) können ein oder mehrere aliphatische Polyamide oder/und aliphatische Copolyamide sowie gegebenenfalls auch einen Gehalt an teilaromatischen Polyamiden oder/und an teilaromatischen Copolyamiden enthalten. Beispiele hierfür sind:
- aliphatische Polyamide: PA6, PA66, PA12;
- aliphatische Copolyamide: PA4/6, PA6/66, PA6/69, PA6/9, PA6/10, PA6/12, Polyetheramide, Polyesteramide, Polyetheresteramide, Polyamidurethane, Poly(ether-Block-Amide);
- teilaromatische Polyamide: PA6-I, Nylon-MXD6 (Polykondensat aus *meta*-Xylylendiamin und Adipinsäure) oder
- teilaromatische Copolyamide: PA6-I/6-T, PA-6/6-I.

Besonders bevorzugte Komponenten sind PA6, PA66, PA12, PA6/66, Nylon-MXD6 und PA6-I/6-T. Besonders bevorzugte Mischungen enthalten mindestens zwei dieser Polyamide. Der Anteil an teilaromatischen (Co)-Polyamiden beträgt vorzugsweise nicht mehr als 40 Gew.-% bezogen auf eine Schicht (A), besonders bevorzugt nicht mehr als 25 Gew.-%.

Zusätzlich kann die Schicht (A) noch andere Polymere enthalten, beispielsweise olefinische Copolymere wie EMAA (Ethylen-Methacrylsäure-Copolymer), hieraus abgeleitete Ionomere, EVOH oder auch (heiß-)wasserlösliche synthetische Polymere wie z.B. Polyvinylalkohol - gegebenenfalls teilweise und vollständig verseift, Copolymere des Vinylalkohols mit Propen-1-ol, Polyalkylenglykole, Polyvinylpyrrolidon, Copolymere aus Vinylpyrrolidon mit mindestens einem α,β-olefinisch ungesättigten Monomerbaustein, Polymerisate von N-Vinylalkylamiden oder (Co-)Polymere der Acrylsäure oder/und des Acrylamids. Der Anteil der weiteren Polymere beträgt vorzugsweise nicht mehr als 35 Gew.-% bezogen auf die Schicht (A). Darüber hinaus können die Schichten (A) bei Bedarf auch noch Pigmente oder/und sonstige Kunststoff-typische Additive enthalten.

In manchen Fällen ist es bevorzugt, dass mindestens eine Schicht als Wasserdampfbarriere wirkt. Dies kann mit mindestens einer polyolefinischen Schicht erzielt werden. Die polyolefinischen Schichten (nachfolgend mit "B" abgekürzt) bestehen üblicherweise im wesentlichen aus Polyethylen, Polypropylen oder/und aus Copolymeren mit Einheiten aus Ethylen, Propylen oder/und α-Olefinen bevorzugt mit 4 bis 8 C-Atomen oder/und aus Dienen. Auch funktionalisierte Vinylmonomere wie z. B. Vinylacetat, (Meth-)Acrylsäure und (Meth-)Acrylsäureester kommen als Co-Bausteine in Frage. Geeignet sind insbesondere C₂/C₃- oder/und C₂/C₈-Copolymere. Den Schichten (B) kommt in erster Linie die Funktion einer Feuchtigkeitsbarriere zu, da Polyolefine gemeinhin sehr geringe Wasserdampfdurchlässigkeiten besitzen. Darüber hinaus können Schichten (B) insbesondere noch Farbstoffe oder/und feinkörnige Pigmente enthalten, wie sie typischerweise zur Einfärbung oder zum UV-Schutz eingesetzt werden. Diese Schichten können daher auch eingefärbt sein.

Um eine gute Barriere für Sauerstoff und sonstige Gase zu erzielen, können bei Bedarf Schichten aus Kunststoffen mit entsprechender Sperrwirkung hinzugefügt werden (nachfolgend mit "C" bezeichnet). Geeignete Kunststoffe hierfür sind Ethylen-Vinylalkohol-Copolymere, die gegebenenfalls teil- oder vollverseift sind (EVOH), und Vinylidenchlorid-Copolymere z.B. mit Vinylchlorid oder Methyl-acrylat als Comonomer (PVDC). Diesen Polymeren können auch Additive wie z.B. Weichmacher sowie andere Polymere wie z.B. Copolyamide oder lonomere beigemischt sein. Auch die Schichten (B) bzw. (C) sind üblicherweise von thermoplastischer Natur.

Zu berücksichtigen ist, dass Schichten entsprechend (A), (B) und (C) im Folienverbund z.T. nicht von selbst gut aneinander haften. Eine gute Haftung wird erzielt, indem zusätzlich mindestens eine Haftvermittlerschicht ("HV") als Zwischenschicht oder/und Innenschicht eingebracht wird, die bei der Folienherstellung z.B. durch Coextrusion Adhäsion zu den jeweils angrenzenden Schichten ausbildet. Geeignete Haftvermittler sind insbesondere Pfropf-oder/und lineare Copolymere, wobei diese Copolymere hier auch mehr als zwei Monomerarten beinhalten können, z.B. Ethylen- oder/und Propylen-Einheiten so-wie Bausteinen aus der Gruppe bestehend aus (Meth-)Acrylsäure, (Meth-)Acrylsäureester, Vinylacetat oder/und Maleinsäureanhydrid. Besonders bevorzugt sind u.a. Maleinsäureanhydrid-gepfropftes Polyethylen (LLDPE-g-MAA), Ethylen-Acrylsäureester-Copolymere sowie Ethylen-Vinylacetat-Copolymere (EVA). Die genannten Polymere können einzeln oder in Mischung in den HV-Schichten enthalten sein. Zusätzlich können die HV-Schichten noch weitere Polymere wie z.B. Polyethylen oder/und sonstige Additive oder/und Pigmente enthalten.

Die HV-Schichten können auch weggelassen werden, wenn eine ausreichende Eigenhaftung zwischen den Funktionsschichten gegeben ist wie sie z.B. oft zwischen Polyamid und manchem EVOH besteht oder indem man die Haftvermittlerkomponente in die Komponenten z.B. der angrenzenden Schicht (B) einmischt.

Die Unterschiede in Aufbau, Struktur oder/und Zusammensetzung zwischen den einzelnen Schichten können jeweils unabhängig voneinander von Schicht zu Schicht gering oder deutlich ausgeprägt sein. Die Übergänge zwischen den einzelnen Schichten können jeweils unabhängig voneinander von Schichtgrenze zu Schichtgrenze deutlich oder schwach ausgeprägt oder fließend sein. Die Schichtgrenzen können im wesentlichen durchgängig eben oder insbesondere aufgrund benachbarter größerer Partikel oder Partikelansammlungen recht rau und gegebenenfalls dann auch mit starker Schwankung der einzelnen Schichtdicken sein. Besonders bevorzugt ist, dass mindestens eine Schicht, insbesondere eine andere Schicht als eine Schicht (P), eine Schicht mit mechanisch tragender Funktion ist. Falls eine Schicht (P) eine tragende Schicht ist, weist diese Schicht vorzugsweise eine Schichtdicke von mindestens 15 µm, besonders bevorzugt von mindestens 20 µm auf.

Die Außenschicht (Z) oder/und die mindestens eine Schicht (P) lässt/lassen sich mit den anderen genannten Schicht-Typen zu unterschiedlichen Mehrschichtstrukturen kombinieren. In vielen Ausführungsformen ist es wesentlich, dass unter der Außenschicht (Z) mindestens eine Schicht mit mechanisch tragender Funktion existiert. In der folgenden Auflistung der bevorzugten Schichtabfolgen ist statt (Z) für die Außenschicht die Art der Außenschicht angegeben worden. Bevorzugte Schichtstrukturen sind (zu den Abkürzungen siehe weiter oben):

| Schlauchaußenseite: | Schlauchinnenseite |
|---|---|
| 1) | A/P/A |
| 2) | B/P/A |
| 3) | C/P/A |
| 4) | A/P/HV/B |
| 5) | A/P/HV/C |
| 6) | A/P/B/A |
| 7) | B/P/C/A |
| 8) | A/P/A/A |
| 9) | B/HV/P/A |
| 10) | C/HV/P/A |
| 11) | A/B/P/A |
| 12) | A/B/P/C |
| 13) | A/P/B/C/A |
| 14) | A/P/A/HV/B |
| 15) | A/P/A/HV/A |
| 16) | A/C/P/B/A |
| 17) | A/HV/A/P/A |
| 18) | B/HV/C/P/A |
| 19) | A/P/A/P/B |
| 20) | A/P/A/P/A |
| 21) | A/P/HV/P/A |
| 22) | A/P/P/HV/B |
| 23) | C/A/B/P/A |
| 24) | A/P/HV |
| 25) | A/P/HV/B/HV/A |
| 26) | B/HV/A/P/A/C |
| 27) | A/P/A/HV/B/HV/C |
| 28) | B/HV/P/HV/C/HV/A |
| 29) | A/P/A/A/A |

Besonders bevorzugt sind Strukturen gemäß 1), 2), 4), 6), 13), 14), 15), 20) und 21). Auf der Schlauchaußenseite befindet sich die Außenschicht (Z) und auf der Schlauchinnenseite die Innenschicht (I). Die mindestens eine Schicht (P) der Hülle kann jeweils eine Zusammensetzung bzw. Funktion der Schicht (A), (B), (C) oder/und (HV) einnehmen, wobei auch alle möglichen Kombinationen der Übergänge zwischen diesen Arten von Schichten für eine Schicht (P), als auch für andere Arten von Schichten wie z.B. (Z) und (I) möglich sind. Vorzugsweise ist eine Schicht (P) eine Schicht (A) oder eine Schicht auf Basis von (A) kombiniert mit (B), (C) oder/und (HV). Besonders bevorzugt ist, dass eine Schicht (P) die erste Schicht unter der Außenschicht (Z) ist oder bei einer Hülle mit insgesamt mindestens 5 Schichten die erste oder zweite Schicht ist unter der Außenschicht (Z).

Vorzugsweise weist die Nahrungsmittelhülle neben der Schicht (P) mindestens eine Schicht auf ausgewählt aus Schichten (A) mit einem Gehalt an thermoplastischer Substanz auf Basis von (Co-)Polyamid(en), Schichten (B) mit einem Gehalt an Polyolefin(en) und Schichten (C) mit einer Sperrwirkung für Sauerstoff und weitere Gase auf sowie gegebenenfalls zusätzlich auch mindestens eine Schicht (HV) als Haftvermittler-Zwischenschicht oder/und als Haftvermittler-Innenschicht.

Vorzugsweise enthält die Nahrungsmittelhülle mindestens eine Schicht (A) mit einem Gehalt an thermoplastischer Substanz auf Basis von (Co-)Polyamid(en) und mindestens eine tragende Schicht als eine mittlere Schicht sowie gegebenenfalls auch mindestens eine Schicht (B) mit einem Gehalt an Polyolefin(en), gegebenenfalls auch mindestens eine Schicht (C) mit einer Sperrwirkung für Sauerstoff und weitere Gase oder/und gegebenenfalls auch mindestens eine Schicht (HV) als Haftvermittler-Zwischenschicht oder/und als Haftvermittler-Innenschicht.

Vorzugsweise weist die Nahrungsmittelhülle mindestens eine Schicht (A) mit einem Gehalt an thermoplastischer Substanz auf Basis von (Co-)Polyamid(en) sowie mindestens eine Art der folgenden Schichten auf: Gegebenenfalls auch mindestens eine Schicht (B) mit einem Gehalt an Polyolefin(en), gegebenenfalls auch mindestens eine Schicht (C) mit einer Sperrwirkung für Sauerstoff und weitere Gase oder/und gegebenenfalls auch mindestens eine Schicht HV als Haftvermittler-Zwischenschicht oder/und als Haftvermittler-Innenschicht.

Vorzugsweise weist die Nahrungsmittelhülle neben der Außenschicht (Z) mindestens eine Schicht (A) mit einem Gehalt an thermoplastischer Substanz auf Basis von (Co-)Polyamid(en) und mindestens eine Schicht (HV) als Haftvermittler-Zwischenschicht oder/und Haftvermittler-Innenschicht auf.

Vorzugsweise ist mindestens eine Schicht (P) eine Schicht (A) mit einem Gehalt an thermoplastischer Substanz auf Basis von (Co-)Polyamid(en).

Vorzugsweise weist mindestens eine Schicht, insbesondere eine Schicht, die nicht grobkörnige Partikel aufweist, oder insbesondere eine mittlere Schicht, eine tragende Funktion und einen Gehalt an thermoplastischen Bestandteilen auf Basis von (Co-)Polyamid(en) von mehr als 50 Gew.-% auf.

Die Aufgabe wird außerdem gelöst mit einem Verfahren zur Herstellung einer Nahrungsmittelhülle, das dadurch gekennzeichnet ist, dass mindestens drei thermoplastische Massen hergestellt und bei einer Coextrusion erweicht oder/und zumindest partiell erschmolzen werden, wobei mindestens drei Schichten erzeugt werden, die zu einer einzigen Folie in Form einer im wesentlichen schlauchförmigen Hülle verarbeitet werden und dass mindestens einer Masse, die zur Herstellung von einer Schicht (P) im mittleren Bereich des Schichtaufbaus zwischen der Außenschicht (Z) und der Innenschicht (I) verwendet wird, anorganische oder/und organische grobkörnige Partikel zugesetzt werden, bei denen zumindest eine Art Partikel eine mittlere Partikelgröße d₅₀ von mindestens 5 µm aufweist.

Die Herstellung des Blends aus der thermoplastischen Kunststoffmatrix und den anorganischen bzw. organischen Partikeln für die Schicht (P) kann z.B. in einem Compoundierungsschritt nach an sich bekannten Verfahren erfolgen. Hieran kann sich eine Coextrusion als Schlauchextrusion anschließen. Die oben angegebenen Stoffe werden ebenfalls bei Bedarf während des Knet- bzw. Mischprozesses zugegeben und meist gleichmäßig oder im wesentlichen gleichmäßig in die Zusammensetzung für die jeweilige Schicht eingearbeitet. Bei der Schlauchextrusion werden alle Schichten in der Coextrusionsringdüse gleichzeitig geformt und anschließend hinter der Düse zu einer einzigen, nahtlosen, mehrschichtigen Folie in Form einer schlauchförmigen Hülle zusammengeführt und verschmolzen.

Die Herstellung der Nahrungsmittelhülle gemäß einer der beschriebenen Strukturen erfolgt durch Coextrusion und vorzugsweise anschließend durch Schlauchbiasen oder durch biaxiale Schlauchstreckung. Entsprechende Verfahren sind dem Fachmann an sich geläufig.

Die Blends aus den anorganischen bzw. organischen Partikeln und der I<unststoffmatrix sowie die weiteren vorgesehenen Polymere bzw. Gemische werden üblicherweise in separaten Extrudern aufgeschmolzen sowie anschließend in einer beheizten Coextrusions-Ringdüse zusammengeführt. Der ringförmig austretende aus mehreren Schichten bestehende Schmelzefilm kann nun entweder direkt zu einem Folienschlauch aufgeblasen werden oder durch einen Biaxial-Streckprozess mit gegebenenfalls nachgeschalteter Thermofixierung geführt werden. Bei letzterem Prozess wird der Schmelzefilm in der Regel durch schnelles Abkühlen zu einem amorphen Vorschlauch verfestigt und durch anschließendes Wiedererwärmen auf meistens ca. 80 °C und mittels eines zwischen zwei Quetschwalzenpaaren eingeschlossenen Luftpolsters biaxial verstreckt (= orientiert). Die anschließende Thermofixierung kann erfolgen, indem der verstreckte Schlauch durch eine weitere Heizzone, gegebenenfalls unter Stabilisierung mit einem zweiten Luftpolster, geführt wird. Auf diese Weise lässt sich die thermische Schrumpfneigung der Hülle auf praxisrelevante Werte verringern, die in der Regel bei ca. 5 bis 20 % in Längs- und Querrichtung liegen und die bei 80 °C gemessen werden. Schließlich kann der erfindungsgemäß hergestellte Hülle anschließend zu einem einseitig abgebundenen Abschnitt, zu einer Raffraupe, zu einer naturdarmähnlichen Form, insbesondere zu einem Kranzdarm oder zu einem Fettende, verarbeitet werden. Diese Hülle kann als Lebensmittelverpackung insbesondere für ein Milchprodukt oder für eine Wurstware, vorzugsweise als künstliche Wursthülle, verwendet werden.

Die erfindungsgemäßen Nahrungsmittelhüllen weisen die folgenden Vorteile auf:
1) Die Hülle lässt sich stabiler und eher fehlerfrei produzieren, wenn die grobkörnigen Partikel nicht direkt in die Außenschicht (Z) und nicht direkt in die Innenschicht (I) eingebaut werden, weil sie der entsprechenden mindestens einen Masse, die für die mittlere Schicht vorgesehen ist, zugesetzt wird. Wenn sich die grobkörnigen Partikel dagegen direkt in der Außenschicht (Z) befinden, so sammeln sich in der Regel an der Düsenspaltkante in kurzer Zeit Ablagerungen an, die den Produktionsprozess behindern können. Es wurde bei den ersten Versuchen ermittelt, dass die Menge der Ablagerungen im wesentlichen umgekehrt proportional zu ihrer Härte bzw. der Härte der Partikel sind. Die Ablagerungen sind oft bei grobkörnigen organischen Partikeln deutlich stärker als bei grobkörnigen anorganischen Partikeln. Die Ablagerungen können z.B. im Fall Polyamid-haltiger Systeme auch zumindest teilweise hervorgerufen sein durch in Zersetzung befindliches, abgebautes oder/und verbranntes organisches Material wie z.B. niedermolekulares Polyamid, das u.a. bei der Herstellung eines Masterbatch-Ansatzes z.B. auf der Basis von Füllstoff (= Partikeln) und Polyamid entstehen kann. Beim Einsatz grobkörniger organischer Partikel können derartige Ablagerungen auch aus oder eher durch den zumindest teilweise verbrannten Stoff der organischen Partikel entstehen. Wenn die grobkörnigen Partikel nicht primär in der Außenschicht (Z) und nicht primär in der Innenschicht (I) eingeschlossen sind, so dass die Düsenspaltkante keinen direkten Kontakt mit der Partikel enthaltenden Schicht hat, kann dieses zumindest teilweise verbrannte Material weniger oder gar nicht angehäuft werden.
1a) Die Düsenablagerungen führen vor allem zu den so genannten Kaliberschwankungen, d.h. die Ablagerungen wirken sich störend auf die Gleichmäßigkeit des Schlauchdurchmessers aus. Sie führen vielfach an der Düse zu Verengungen des wirksamen Düsenquerschnitts und somit zu Schwankungen des Durchmessers (Kalibers) des extrudierten Stranges. Ein erstes Teilstück des Schlauches zeigt beispielsweise einen Durchmesser von 47 mm, das nächste Teilstück von 46 mm, das darauf folgende wieder von 47 mm usw.. Dies ist ein ernstes Problem.
1b) Teilweise können die Ablagerungen ohne Anhalten des Extruders entfernt oder zumindest teilweise entfernt werden. Hierbei kann jedoch der Strang leicht beschädigt werden. Wenn die Produktion jedoch angehalten wird, was sogar z.B. etwa alle 5 bis 10 Minuten erforderlich sein kann, lässt sich die Ansammlung an Ablagerungen in der Regel mit einem Wischen insbesondere an der Düsenspaltkante der Coextrusionsringdüse entfernen, bevor die Fertigung wieder angefahren wird. Hierbei wird der extrudierte Strang oft abgeschnitten und der meist zu kurze und teilweise fehlerhafte Hüllenabschnitt, der oft etwa 50 bis 450 m lang ist, verworfen. Wenn fast keine oder keine Ablagerungen auftreten, läuft der Herstellungsprozess stabiler und mit geringerer Ausschussquote, da der Herstellungsprozess nicht deswegen angehalten werden muss, um die Ablagerungen zu entfernen, da diese während des Extrudierens üblicherweise nur teilweise oder gar nicht entfernt werden können.
1c) Wenn die Ablagerungen nicht entfernt werden, können sie sich zu einer Größe ansammeln, dass sogar vereinzelt ein Teil der Ablagerungen von dem extrudierten Strang mitgerissen und gegebenenfalls in die Folie sogar mit eingebaut wird. Die Folie kann an solchen Stellen leichter einreißen und dann auch durchreißen. Solche in die Hülle eingebauten Fehlstellen sind jedoch nicht vertretbar, und der Hüllenabschnitt ist auszusortieren. Das Einreißen von Hüllen aufgrund von mitgerissenen bzw. in die Hülle eingebauten Ablagerungen kommt hin und wieder einmal vor. Denn bei der Schlauchorientierung herrschen in der Regel Drücke zwischen 1,5 und 2,5 bar.
2) Die Folienoberfläche ist weniger abrasiv, wenn sich die grobkörnigen Partikel nicht direkt in der Außenschicht (Z) und nicht direkt in der Innenschicht (I), sondern in mindestens einer der mittleren Schichten befinden. Die grobkörnigen Partikel drücken sich, obwohl sie sich primär in mindestens einer der mittleren Schichten befinden, in vielen Ausführungsformen zumindest teilweise aus der Außenschicht (Z) heraus oder/und drücken die Außenschicht (Z) oder/und die Innenschicht (I) und gegebenenfalls auch mindestens eine der mittleren Schichten zumindest teilweise um die grobkörnigen Partikel herum aus dem sonst im wesentlichen ebenen Niveau der Oberfläche heraus. Sie sind bei der letztgenannten Ausführungsvariante jedoch vereinzelt oder oft von einem dünnen Kunststofffilm umgeben. Auf diese Weise kann die Abnutzung der Maschinen, Hilfsmittel und Werkzeuge wie z.B. Messer oder/und Gummilippen, die z.B. beim Befüllen der Hülle mit Wurstbrät helfen, deutlich vermindert werden. Dies betrifft vor allem Hüllen, in denen grobkörnige anorganische Partikel eingelagert sind, und weniger solche mit organischen Partikeln.
3) Aufgrund des Gehalts an grobkörnigen Partikeln lässt sich die erfindungsgemäße Hülle besser von dem umhüllten Nahrungsmittel abziehen und einreißen, abreißen bzw. durchreißen.
4) Wenn eine der äußeren Schichten, insbesondere die Außenschicht (Z), mindestens ein Mattierungsmittel enthält, ergibt sich nicht nur ein besonders rauer, sondern auch ein wesentlich matterer Eindruck von der äußeren Oberfläche der Hülle. Entsprechendes gilt auch für die Innenschicht (I).

Es gelang überraschenderweise auf vergleichsweise einfache Weise, gleichartige hochwertige Hüllen hoher Rauheit und matten Erscheinungsbildes mit hoher Produktionsstabilität und Fehlerarmut bzw. Fehlerfreiheit herzustellen.

Es war überraschend, dass es gelang, Nahrungsmittelhüllen herzustellen, die Natur-, Kollagen-, Hautfaser- und faserverstärkten Cellulosedärmen weitgehend gleichen, obwohl die grobkörnigen Partikel sich nicht in der Außenschicht (Z) befinden und der Hülle trotzdem eine hohe Rauheit verleihen können.

Es war überraschend, dass es gelang, Hüllen mit rauem matten Erscheinungsbild herzustellen, wenn die grobkörnigen Partikel nicht in der Außenschicht (Z), sondern in mindestens einer der anderen Schichten vorhanden sind und wenn die Außenschicht (Z) Mattierungsmittel enthält. Befinden sich die grobkörnigen Partikel in der Außenschicht (Z), so treten die Düsenablagerungen oft bereits nach etwa 5 min auf. Sind sie hingegen in einer mittleren Schicht, so bilden sie sich im selben Ausmaß oft erst nach etwa 500 min, also nach über 8 Stunden.

Überraschenderweise kann eine Hülle, die nur mittelgroße organische Partikel und keine größeren anorganischen Partikel aufweist, die sich wenig oder gar nicht in einer organischen Mischphase auflösen, einen deutlich matteren Eindruck ergeben als eine Hülle, die als größere Partikel nur grobkörnige anorganische Partikel enthält.

### Beispiele und Vergleichsbeispiele

Im folgenden werden die Eigenschaften erfindungsgemäßer Hüllen durch ausgewählte Ausführungsbeispiele verdeutlicht.

### Beispiel 1

### Wollastonit, und PA6, Schlauch biaxial verstreckt und thermofixiert

Mit Hilfe der Coextrusionstechnik wurde ein fünfschichtiger Primärschlauch über fünf Einschneckenextruder und eine nachgeschaltete Coextrusionsringdüse hergestellt mit
a) einer Innenschicht (I = A) bestehend aus 80 Gew.-% Polyamid PA6 (Grilon^{®} F34) und 20 Gew.-% PA6I/6T (Grivory^{®} G21),
b) einer mittleren Schicht (HV) bestehend aus einem Haftvermittler auf Basis von MSA-gepfropftem LLDPE (Modic-AP^{©} L513),
c) einer weiteren mittleren Schicht (A) bestehend aus 100 Gew.-% Polyamid PA6 (Grilon^{®} F34),
d) einer mittleren Schicht (P = A) bestehend aus einem auf einem Zweiwellenkneter hergestellten Compound aus 85 Gew.-% Polyamid PA6 (Grilon^{®} F34) und 15 Gew.-% Wollastonit (Tremin^{®} 283 100 EST) und
e) einer Außenschicht (Z = A) bestehend aus 100 Gew.-% Polyamid PA6 (Grilon^{®} F34).

Das der Schicht d) zugesetzte Wollastonit-Pulver hatte eine mittlere Partikelgröße von 8 µm und eine breite Partikelgrößenverteilung mit d₉₅ bei etwa 50 µm und mit den größten Partikeln bei etwa 70 µm. Der Primärschlauch wurde schnell auf ca. 20 °C abgekühlt und anschließend auf ca. 80 °C erwärmt und bei dieser Temperatur biaxial bei einem Flächenstreckverhältnis von 9,25 verstreckt. In einer weiteren Heizzone wurde der Schlauch anschließend thermofixiert, so dass der thermische Schrumpf - in Wasser bei 80 °C gemessen - noch ca. 10 - 12 % betrug. Der Durchmesser des thermofixierten Schlauches betrug 70 mm bei einer Gesamtwandstärke im Bereich von 50 bis 70 µm. Dabei entfielen ca. 10 % auf die Innenschicht a), ca. 30 % auf die mittlere Schicht b), ca. 30 % auf die mittlere Schicht c), ca. 20 % auf die mittlere Schicht d) und ca. 10 % auf die Außenschicht e). Dieser Hüllenaufbau entspricht dem oben beschriebenen Aufbau A / HV / A / P / A. Die Schicht (P) enthält als einzige Schicht Partikel. Die Schicht (P) verleiht der Hülle einen besonders rauen und matten Eindruck: Die Hülle zeichnet sich durch einen recht geringen Oberflächenglanz und eine sehr hohe Rauheit aus (siehe Tabelle 1). Beim biaxialen Verstrecken der Hülle ergaben sich keine Beschädigungen. Es gab nahezu keine Düsenablagerungen und bei kurzen Produktionsversuchen keine sichtbare Abnutzung der Werkzeuge, der Gummilippen und der Messer.

### Beispiel 2

### Cellulose und PE, Schlauch biaxial verstreckt und thermofixiert

Mit Hilfe der Coextrusionstechnik wurde ein vierschichtiger Primärschlauch über vier Einschneckenextruder und eine nachgeschaltete Coextrusionsringdüse hergestellt mit
a) einer Innenschicht (I = A) bestehend aus 80 Gew.-% Polyamid PA6 (Grilon^{®} F34) und 20 Gew.-% PA6I/6T (Grivory^{®} G21),
b) einer mittleren Schicht (A) bestehend aus 100 Gew.-% Polyamid PA6 (Grilon^{®}F34),
c) einer mittleren Schicht (P) bestehend aus einem auf einem Zweiwellenkneter hergestellten Compound aus 54 Gew.-% Polyethylen LDPE (Escorene^{®} LD165BW), 40 Gew.-% eines Haftvermittlers auf Basis von MSA-gepfropftem LLDPE (Modic-AP^{®} L513) und 6 Gew.-% Cellulose-Pulver (Jelucel^{®} PF90), so dass ein Übergang zwischen den Schichtarten (B) und (HV) vorliegt, und
d) einer Außenschicht (Z = A) bestehend aus 100 Gew.-% Polyamid PA6 (Grilon^{®} F34).

Das Cellulose-Pulver der Schicht c) zeigte eine mittlere Partikelgröße von etwa 32 µm, wobei die größten Partikel eine Partikelgröße von etwa 110 µm aufwiesen. Der Primärschlauch wurde schnell auf ca. 20 °C abgekühlt und anschließend auf ca. 80 °C erwärmt und bei dieser Temperatur biaxial bei einem Flächenstreckverhältnis von 9,25 verstreckt. In einer weiteren Heizzone wurde der Schlauch anschließend thermofixiert, so dass der thermische Schrumpf - in Wasser bei 80 °C gemessen - noch ca. 10 - 12 % betrug. Der Durchmesser des thermofixierten Schlauches betrug 70 mm bei einer Gesamtwandstärke im Bereich von 55 bis 75 µm. Dabei entfielen ca. 15 % auf die Innenschicht a), ca. 50 % auf die mittlere Schicht b), ca. 25 % auf die mittlere Schicht c), und ca. 10 % auf die Außenschicht d). Die Schicht (P) enthält als einzige Schicht Partikel. Die Hülle zeichnet sich unter anderem durch einen recht geringen Oberflächenglanz und eine sehr hohe Rauheit aus (siehe Tabelle 1). Dieser Hüllenaufbau entspricht dem oben beschriebenen Aufbau A / A / P / A. Beim biaxialen Verstrecken der Hülle ergaben sich keine Beschädigungen. Es gab fast keine Mengen an Düsenablagerungen und bei Produktionsversuchen keine sichtbare Abnutzung der Werkzeuge, der Gummilippen und der Messer.

### Beispiel 3

### Wollastonit und PA6, Schlauch biaxial verstreckt und thermofixiert

Mit Hilfe der Coextrusionstechnik wurde ein dreischichtiger Primärschlauch über drei Einschneckenextruder und eine nachgeschaltete Coextrusionsringdüse hergestellt mit
a) einer Innenschicht (I = A) bestehend aus 80 Gew.-% Polyamid PA6 (Grilon^{®} F34) und 20 Gew.-% PA6I/6T (Grivory^{®} G21),
b) einer mittleren Schicht (A), die auch als Schicht (P) dient, bestehend aus einem auf einem Zweiwellenkneter hergestellten Compound aus 85 Gew.-% Polyamid PA6 (Grilon^{®} F34) und 15 Gew.-% Wollastonit (Tremin^{®} 283 100 EST; d₅₀ = 8 µm und d₉₅ = 50 µm) und
c) einer Außenschicht (HV) bestehend aus 50 Gew.-% eines Haftvermittlers auf Basis von MSA-gepfropftem LLDPE (Modic-AP^{®} L513), 40 Gew.-% Polyethylen LDPE (Escorene^{®} LD165BW) und 10 Gew.-% Wollastonit als Mattierungsmittel (Tremin^{®} 283 600 AST; d₅₀ = 3,5 µm, d₉₅ = 13 µm).

Das Mattierungsmittel Wollastonit zeigte eine recht enge Partikelgrößenverteilung, während die grobkörnigen Wollastonit-Partikel eine recht breite Partikelverteilung aufwies. Der Primärschlauch wurde schnell auf ca. 20 °C abgekühlt und anschließend auf ca. 80 °C erwärmt und bei dieser Temperatur biaxial bei einem Flächenstreckverhältnis von 9,25 verstreckt. In einer weiteren Heizzone wurde der Schlauch anschließend thermofixiert, so dass der thermische Schrumpf - in Wasser bei 80 °C gemessen - noch ca. 10 - 12 % betrug. Der Durchmesser des thermofixierten Schlauches betrug 70 mm bei einer Gesamtwandstärke im Bereich von 45 bis 65 µm. Dabei entfielen ca. 60 % auf die Innenschicht a), ca. 30 % auf die mittlere Schicht b) und ca. 10 % auf die Außenschicht c). Die Schicht (P) enthält als einzige Schicht Partikel größer als 18 µm. Die Hülle zeichnet sich unter anderem durch einen recht geringen Oberflächenglanz und eine sehr hohe Rauheit aus (siehe Tabelle 1). Dieser Hüllenaufbau entspricht dem oben beschriebenen Aufbau A / P / HV. Beim biaxialen Verstrecken der Hülle ergaben sich keine Beschädigungen. Es gab nahezu keine Düsenablagerungen und bei kurzen Produktionsversuchen keine sichtbare Abnutzung der Werkzeuge, der Gummilippen und der Messer.

### Beispiel 4

### Stärke, Glycerin und PA6, Schlauch blaxial verstreckt und thermofixiert

Mit Hilfe der Coextrusionstechnik wurde ein dreischichtiger Primärschlauch über drei Einschneckenextruder und eine nachgeschaltete Coextrusionsringdüse hergestellt mit
a) einer Innenschicht (A) bestehend aus 80 Gew.-% Polyamid PA6 (Grilon^{®} F34) und 20 Gew.-% PA6I/6T (Grivory^{®} G21),
b) einer mittleren Schicht (A), die auch als Schicht (P) dient, bestehend aus einem auf einem Zweiwellenkneter hergestellten Compound aus 50 Gew.-% Polyamid PA6 (Grilon^{®} F34), 30 Gew.-% Maisstärkepulver und 20 Gew.-% Glycerin sowie
c) einer Außenschicht (A) bestehend aus 100 Gew.-% Polyamid PA6 (Grilon^{®} F34).

Die Partikelgrößenverteilung lag im Bereich von 5 bis 35 µm, die mittlere. Partikelgröße d₅₀ bei 18 µm. Der Primärschlauch wurde schnell auf ca. 20 °C abgekühlt und anschließend auf ca. 80 °C erwärmt und bei dieser Temperatur biaxial bei einem Flächenstreckverhältnis von 9,25 verstreckt. In einer weiteren Heizzone wurde der Schlauch anschließend thermofixiert, so dass der thermische Schrumpf - in Wasser bei 80 °C gemessen - noch ca. 10 - 12 % betrug. Der Durchmesser des thermofixierten Schlauches betrug 70 mm bei einer Gesamtwandstärke im Bereich von 45 bis 65 µm. Dabei entfielen ca. 60 % auf die Innenschicht a), ca. 30 % auf die mittlere Schicht b) und ca. 10 % auf die Außenschicht c). Nur die Schicht (P) enthält als einzige Schicht Partikel. Die Hülle zeichnet sich unter anderem durch einen sehr geringen Oberflächenglanz und eine erhöhte Rauheit aus (siehe Tabelle 1). Dieser Hüllenaufbau entspricht dem oben beschriebenen Aufbau A / P / A. Beim biaxialen Verstrecken der Hülle ergaben sich keine Beschädigungen. Es gab fast keine Düsenablagerungen und bei Produktionsversuchen keine sichtbare Abnutzung der Werkzeuge, der Gummilippen und der Messer.

Durch den Glycerin-Gehalt wurde die Stärke plastifiziert und dadurch thermoplastisch gestaltet. Sie wurde dadurch für Polyamid chemisch verträglich gestaltet, so dass die Stärke teilweise mit dem Polyamid eine Mischphase als Grundmasse bildete und der Gehalt an Stärke-Partikeln zurückging. Obwohl der Anteil und die Größe der grobkörnigen organischen Partikel signifikant zurückging, ist der optische Eindruck bei einem Glanzwert von 4 erstaunlich hoch. Möglicherweise wirkt sich hierbei auch eine Struktur der Hülle mit häufigen deutlichen Brechungsindexunterschieden aus.

### Beispiel 5

### Wollastonit und PA6, wasserdampfdurchlässiger Schlauch, biaxial verstreckt und thermofixiert

### Herstellung des Polyvinylalkohol-Compounds:

In einem Rührkessel mit einer Mantel-Flüssigkeitsheizung und mit einem wandgängigen Rührer wurden bei Raumtemperatur 75 Gew-% Polvinylalkohol (Mowiol^{®} 26-88 der Hoechst AG) vorgelegt. Anschließend wurden unter Rühren bei ca. 1000 U/min zunächst 15 Gew.-% Polyethylenglykol und danach 7,5 Gew.-% Glycerin sowie 2,5 Gew.-% Wasser zugesetzt, jeweils bezogen auf die Gesamtmasse des Gemisches. Der Kesselinhalt wurde auf 100 bis 110 °C erwärmt, 15 min bei dieser Temperatur gerührt und unter weiterem Rühren wieder auf 30 - 40 °C abgekühlt. Das resultierende Pulver wurde über eine Dosiervorrichtung in einen beheizten Zweiwellenkneter von 25 mm Zylinderdurchmesser und einem L/D-Verhältnis von 36 über eine Einloch-Austrittsdüse dosiert, so dass sich ein Massestrom von 8 kg/h ergab. Die Schneckendrehzahl betrug 250 U/min. Die Heizungen waren auf Temperaturen von 120 °C (Aufgabestelle) stromabwärts bis auf 180 °C steigend zur Düse hin eingestellt. Der austretende wasserklare Strang wurde auf einer Luftkühlstrecke abgekühlt und anschließend mittels eines Stranghäckslers zu Granulatkörnern zerteilt.

### Herstellung des coextrudierten Schlauchs

Mit Hilfe der Coextrusionstechnik wurde ein dreischichtiger Primärschlauch über drei Einschneckenextruder und eine nachgeschaltete Coextrusionsringdüse hergestellt mit
a) einer Innenschicht (I = A) bestehend aus 80 Gew.-% PA6 (Grilon^{®}F34) und 20 Gew.-% Polyvinylalkohol-Compound,
b) einer mittleren Schicht (P = A) bestehend aus 75 Gew.-% PA6 (Grilon^{®} F34), 20 Gew.-% Polyvinylalkohol-Compound (PVAL) und 5 Gew.-% Wollastonit (Tremin^{®} 283 100 EST, d₅₀ = 8 µm, d₉₅ = 50 µm) und
c) einer Außenschicht (Z = A) bestehend aus 80 Gew.-% PA6 (Grilon^{®}F34) und 20 Gew.-% Polyvinylalkohol-Compound.

Der Primärschlauch wurde schnell auf ca. 20 °C abgekühlt, anschließend auf ca. 80 °C erwärmt und bei dieser Temperatur biaxial bei einem Flächenstreckverhältnis von 9,25 verstreckt. In einer weiteren Heizzone wurde der Schlauch anschließend thermofixiert, so dass der thermische Schrumpf - in Wasser bei 80°C gemessen - noch ca. 10 - 12 % betrug. Der Durchmesser des thermofixierten Schlauches betrug 70 mm bei einer Gesamtwandstärke im Bereich von 50 bis 70 µm. Dabei entfielen ca. 60 % auf die Innenschicht a), ca. 30 % auf die mittlere Schicht b) und ca. 10 % auf die Außenschicht c). Dieser Hüllenaufbau entspricht dem oben beschriebenen Aufbau A / P / A. Die Schicht (P) enthält als einzige Schicht Partikel. Die Schicht (P) verleiht der Hülle einen besonders rauen und matten Eindruck: Die Hülle zeichnet sich durch einen recht geringen Oberflächenglanz und eine sehr hohe Rauheit aus (siehe Tabelle 1). Beim biaxialen Verstrecken der Hülle ergaben sich keine Beschädigungen. Es gab nahezu keine Düsenablagerungen und bei den Produktionsversuchen keine sichtbare Abnutzung der Werkzeuge, der Gummilippen und der Messer. Der Polyvinylalkohol quillt mit Wasser auf, hält den Wassergehalt in der Hülle, dient als Transportmedium für Wasser und Wasserdampf.

### Beispiel 6

### Grobkörnige Partikel und Mattierungsmittel aus Wollastonit, PA6, Schlauch biaxial verstreckt und thermofixiert

Mit Hilfe der Coextrusionstechnik wurde ein fünfschichtiger Primärschlauch über fünf Einschneckenextruder und eine nachgeschaltete Coextrusionsringdüse hergestellt mit
a) einer Innenschicht (I = A) bestehend aus 80 Gew.-% PA6 (Grilon^{®} F34) und 20 Gew.-% PA6I/6T (Grivory^{®} G21),
b) einer mittleren Schicht (HV) bestehend aus einem Haftvermittler auf Basis von MSA-gepfropftem LLDPE (Modic-AP^{®} L513),
c) einer weiteren mittleren Schicht (A) bestehend aus 100 Gew.-% PA6 (Grilon^{®} F34),
d) einer weiteren mittleren Schicht (P = A) bestehend aus einem auf einem Zweiwellenkneter hergestellten Compound aus 90 Gew.-% PA6 (Grilon^{®} F34) und 10 Gew.-% Wollastonit (Tremin^{®} 283 100 EST, d₅₀ = 8 µm, d₉₅ = 50 µm) und
e) einer Aussenschicht (Z = A) bestehend aus 90 Gew.-% PA6 (Grilon^{®}F34) und 10 Gew.-% Wollastonit als Mattierungsmittel (Tremin^{®} 283 600 AST, d₅₀ = 3,5 µm, d₉₅ = 13 µm).

Der Primärschlauch wurde schnell auf ca. 20 °C abgekühlt und anschließend auf ca. 80 °C erwärmt und bei dieser Temperatur biaxial bei einem Flächenstreckverhältnis von 9,25 verstreckt. In einer weiteren Heizzone wurde der Schlauch anschließend thermofixiert, so dass der thermische Schrumpf - in Wasser bei 80 °C gemessen - noch ca. 10 - 12 % betrug. Der Durchmesser des thermofixierten Schlauches betrug 70 mm bei einer Gesamtwandstärke im Bereich von 55 bis 75 µm. Dabei entfielen ca. 10 % auf die Innenschicht a), ca. 30 % auf die mittlere Schicht b), ca. 30 % auf die mittlere Schicht c), ca. 20% auf die mittlere Schicht d) und ca. 10% auf die Außenschicht e). Dieser Hüllenaufbau entspricht dem oben beschriebenen Aufbau A / HV / A / P / A. Die Schicht (P) enthält als einzige Schicht grobkörnige Partikel, die Schicht (Z) dagegen feinkörnige als Mattierungsmittel. Die Hülle ist sehr rau und gewährt einen besonders matten Eindruck (siehe Tabelle 1). Beim biaxialen Verstrecken der Hülle ergaben sich keine Beschädigungen. Es gab nahezu keine Düsenablagerungen und bei den Produktionsversuchen keine sichtbare Abnutzung der Werkzeuge, der Gummilippen und der Messer.

Beispiel 6 weist anders als Beispiel 1, das ansonsten gleichartig hergestellt und gleichartig aufgebaut ist, auch Mattierungsmittel - in der Außenschicht (Z) - auf. Die mechanischen und weiteren Eigenschaften dieser Hüllen sind recht ähnlich.

Im Vergleich zu der Hülle des Vergleichsbeispiels 2, die gleichartig hergestellt und gleichartig aufgebaut ist, wenn man davon absieht, dass sich die grobkörnigen Wollastonit-Partikel in der Außenschicht (Z) und nicht in der mittleren Schicht (P) befinden und dass die Außenschicht (Z) auch kein Mattierungsmittel enthält, sind alle mechanischen Eigenschaften der Proben von Beispiel 6 deutlich höher als beim Vergleichsbeispiel 2.

### Beispiel 7

### Wollastonit, Maisstärke und PA6, Blasschlauch

Mit Hilfe der Coextrusionstechnik wurde ein dreischichtiger Blasschlauch über drei Einschneckenextruder und eine nachgeschaltete Coextrusionsringdüse hergestellt mit
a) einer Innenschicht (I = A) bestehend aus 100 Gew.-% PA12 (Grilamid^{®} L25),
b) einer mittleren Schicht (P = A) bestehend aus einem auf einem Zweiwellenkneter hergestellten Compound aus 72 Gew.-% PA6 (Grilon^{®} F34), 20 Gew.-% Maisstärke und 8 Gew.-% Wollastonit (Tremin^{®} 283 100 EST, d₅₀ = 8 µm, d₉₅ = 50 µm) und
c) einer Außenschicht (Z = A) bestehend aus 100 Gew.-% PA12 (Grilamid^{®} L25).

Nach Austritt der verschiedenen Schichten aus der Coextrusionsringdüse wurde der Schlauch durch Hineinblasen von Luft ins Innere des Schlauches und anschließendes Abquetschen des Schlauches durch zwei Walzenpaare auf den gewünschten Durchmesser aufgeblasen. Der Durchmesser des Blasschlauches betrug 90 mm, die Gesamtwandstärke lag im Bereich von 90 bis 110 µm. Dabei entfielen ca. 50 % auf die Innenschicht a), ca. 40 % auf die mittlere Schicht b) und ca. 10 % auf die Außenschicht c). Dieser Hüllenaufbau entspricht dem oben beschriebenen Aufbau A / P / A. Die Schicht (P) enthält als einzige Schicht Partikel. Die Schicht (P) verleiht der Hülle einen besonders rauen und matten Eindruck: Die Hülle zeichnet sich durch einen sehr geringen Oberflächenglanz und eine recht hohe Rauheit aus (siehe Tabelle 1). Während des Blasprozesses ergaben sich keine Beschädigungen der Hülle. Es gab nahezu keine Düsenablagerungen und bei den Produktionsversuchen keine sichtbare Abnutzung der Werkzeuge, der Gummilippen und der Messer. Die Stärke-Partikel waren nicht plastifiziert worden und waren somit nicht thermoplastisch geworden, so dass sie wahrscheinlich keine Mischphase mit der umgebenden organischen Substanz gebildet haben.

### Vergleichsbeispiel 1

### (ohne Partikel, Schlauch biaxial verstreckt und thermofixiert)

In gleicher Weise wie in den Beispielen 1 bis 6 beschrieben wurde ein biaxial verstreckter thermofixierter dreischichtiger Schlauch hergestellt bestehend aus
a) einer Innenschicht (A) bestehend aus 85 Gew.-% Polyamid PA6 (Grilon^{®} F34) und 15 Gew.-% PA6I/6T (Grivory^{®} G21),
b) einer Partikel-freien mittleren Schicht, die Eigenschaften der Schichtart (B) und der Schichtart (HV) aufweist, die jedoch nicht als Schicht (P) dient, bestehend aus 50 Gew.-% eines Polyethylen LDPE (Escorene^{®} LD165BW) vermischt mit 50 Gew.-% eines MSA-gepfropften LLDPE (Admer^{®} NF518E) als Haftvermittler und
c) einer Außenschicht (A) bestehend aus 100 Gew.-% Polyamid PA6 (Grilon^{®} F34).

Der Durchmesser des thermofixierten Schlauches betrug ca. 70 mm bei einer Gesamtwandstärke im Bereich von 40 bits 60 µm. Dabei betrug der Anteil der Innenschicht a) ca. 20 %, der der mittleren Schicht b) ca. 40 % und der der Außenschicht c) ca. 40 %. Im Unterschied zu den vorherigen Beispielen enthält die im Vergleichsbeispiel 1 beschriebene Hülle keine grobkörnigen Partikel. Keine der Schichten enthält Partikel. Dadurch erscheint die Hülle sehr viel glatter und glänzender als die erfindungsgemäßen Hüllen (siehe Tabelle 1). Allerdings sind aufgrund der fehlenden Partikel die mechanischen Eigenschaften der Folie leicht verbessert: Sie ist weniger spröde und zeigt eine höhere Reißfestigkeit und Reißdehnung. Dieser Hüllenaufbau entspricht dem oben beschriebenen Aufbau A / HV-B / A. Beim biaxialen Verstrecken der Hülle ergaben sich keine Beschädigungen. Es gab keine Düsenablagerungen und bei den Produktionsversuchen keine sichtbare Abnutzung der Werkzeuge, der Gummilippen und der Messer.

### Vergleichsbeispiel 2

### Grobkörnige Partikel (Wollastonit) nur in der Außenschicht (Z), Schlauch biaxial verstreckt und thermofixiert

In gleicher Weise wie in den Beispielen 1 bis 6 beschrieben wurde ein fünfschichtiger Primärschlauch über fünf Einschneckenextruder und eine nachgeschaltete Coextrusionsringdüse hergestellt mit
a) einer Innenschicht (I = A) bestehend aus 80 Gew.-% Polyamid PA6 (Grilon^{®} F34) und 20 Gew.-% PA6I/6T (Grivory^{®} G21),
b) einer mittleren Schicht (HV) bestehend aus einem Haftvermittler auf Basis von MSA-gepfropftem LLDPE (Modic-AP^{®} L513),
c) einer weiteren mittleren Schicht (A) bestehend aus 100 Gew.-% Polyamid PA6 (Grilon^{®} F34),
d) einer mittleren Schicht (A) bestehend aus 100 Gew.-% Polyamid PA6 (Grilon^{®}F34) und
e) einer Außenschicht (Z = A = P) bestehend aus einem auf einem Zweiwellenkneter hergestellten Compound aus 85 Gew.-% Polyamid PA6 (Grilon^{®} F34) und 15 Gew.-% Wollastonit (Tremin^{®} 283 100 EST).

Der Primärschlauch wurde schnell auf ca. 20 °C abgekühlt und anschließend auf ca. 80 °C erwärmt und bei dieser Temperatur biaxial bei einem Flächenstreckverhältnis von 9,25 verstreckt. In einer weiteren Heizzone wurde der Schlauch anschließend thermofixiert, so dass der thermische Schrumpf - in Wasser bei 80 °C gemessen - noch ca. 10 - 12 % betrug. Der Durchmesser des thermofixierten Schlauches betrug 70 mm bei einer Gesamtwandstärke im Bereich von 50 bis 70 µm. Dabei entfielen ca. 10 % auf die Innenschicht a), ca. 30 % auf die mittlere Schicht b) und ca. 30 % auf die mittlere Schicht c), ca. 20% auf die mittlere Schicht d) und ca. 10 % auf die Außenschicht e). Die Hülle zeichnet sich durch einen geringen Oberflächenglanz und eine sehr hohe Rauheit aus (siehe Tabelle 1). Dieser Hüllenaufbau entspricht dem oben beschriebenen Aufbau A / HV / A / A / P. Keine der mittleren Schichten enthält Partikel, dafür aber die Außenschicht (Z). Es gab sehr starke Düsenablagerungen, die bereits nach 5 min störten, aber bei den kurzen Produktionsversuchen noch keine sichtbare Abnutzung der Werkzeuge, der Gummilippen und der Messer, hervorriefen. Die Düsenablagerungen führten beim biaxialen Verstrecken der Hülle sehr oft zu starken Kaliberschwankungen, häufig zu störenden Stippen im Schlauch - hervorgerufen durch mitgerissene und in den Schlauch eingelagerte Ablagerungen - und manchmal auch zum Platzen des Schlauches.

**Tabelle 1: Zusammensetzung der mittleren Schicht (P) und Eigenschaften der Hüllenoberfläche aufgrund des Gehalts bzw. des Fehlens anorganischer bzw. organischer Partikel sowie Durchmesserschwankungen**

| | **Schicht (P)** | **Größenverteilung der Partikel in Schicht (P) [µm]** | | **Rauhigkeit [µm]** | | | **Glanzwert bei 60 °** | **Haptischer Eindruck** | **Optischer Eindruck** | **Düsenablagerungen nach** | **Kaliberschwankungen** |
|---|---|---|---|---|---|---|---|---|---|---|---|
| | | | | **Rₐ** | **R_{z}** | **Rₘₐₓ** | | | | | |
| | | **d₅₀** | **d₉₅** | | | | | | | | |
| **Beispiel 1** | Wollastonit, PA6 | 8 | 50 | 2,3 | 14,1 | 19,9 | 20 | sehr gut | gut | 8 h | keine |
| **Beispiel 2** | Cellulose, PE | 32 | 90 | 3,3 | 19,1 | 28,4 | 22 | sehr gut | gut | 8 h | keine |
| **Beispiel 3** | Wollastonit, PA6 | 8 | 50 | 2,7 | 14,2 | 23,6 | 16 | sehr gut | gut | 8 h | keine |
| **Beispiel 4** | Stärke, Glycerin und PA6 | 18 | 25 | 1,7 | 11,2 | 18,4 | 4 | gut | sehr gut | 8 h | keine |
| **Beispiel 5** | Wollastonit, PA6, PVAL | 8 | 50 | 2,2 | 12,6 | 20,9 | 20 | sehr gut | gut | 8 h | keine |
| **Beispiel 6** | Wollastonit, PA6 | 8 | 50 | 1,8 | 12,2 | 19,5 | 13 | sehr gut | bes. gut | 8 h | keine |
| **Beispiel 7** | Wollastonit, Stärke, PA6 | 8 | 50 | 2,1 | 12,9 | 17,4 | 3 | gut | sehr gut | 8 h | keine |
| | | 18 | 25 | | | | | | | | |
| **Vergleichsbeispiel 1** | ohne anorg./org. Partikel | - | - | 0,3 | 3,0 | 3,5 | 90 | sehr schlecht | sehr schlecht | 8 h | keine |
| **Vergleichsbeispiel 2** | Partikel (Woll.) nur in Schicht (Z), PA6 | 8 | 50 | 2,4 | 15,3 | 23,8 | 15 | sehr gut | gut | 5 min | sehr stark |

**Tabelle 2: Foliendicke, Schichtenabfolge, Schichtdickenverteilung, mechanische Daten und Wasserdampfdurchlässigkeit der Hüllen**

| | **Foliendicke** | **Schichtdickenverteilung [%]** | | **Reißfestigkeit** | | **Reißdehnung** | | **. Sigma-5-Wert** | | **Sigma-15-Wert** | | **WDD¹⁾** |
|---|---|---|---|---|---|---|---|---|---|---|---|---|
| | | | | **längs** | **quer** | **längs** | **quer** | **längs** | **quer** | **längs** | **quer** | **[g/m²d]** |
| | **[µm]** | **innen** | **außen** | **[N/mm²]** | | **[%]** | | **[N/mm²]** | | **[N/mm²]** | | |
| **Beispiel 1** | 60 | 10/30/30/20/10 | | 77 | 72 | 94 | 81 | 13,1 | 12,5 | 25,7 | 21,9 | 5 |
| | | A/HV/A/P/A | | | | | | | | | | |
| **Beispiel 2** | 65 | 15/50/25/10 | | 82 | 76 | 160 | 113 | 7,2 | 6,4 | 15,2 | 15,5 | 6 |
| | | A/A/P/A | | | | | | | | | | |
| **Beispiel 3** | 55 | 60/30/10 | | 72 | 68 | 73 | 80 | 11,8 | 9,3 | 30,5 | 20,2 | 7 |
| | | A/P/HV | | | | | | | | | | |
| **Beispiel 4** | 56 | 60/30/10 | | 83 | 60 | 120 | 96 | 8,4 | 6,9 | 18,2 | 15,5 | 6 |
| | | A/P/A | | | | | | | | | | |
| **Beispiel 5** | 61 | 60/30/10 | | 38 | 27 | 74 | 60 | 6,1 | 3,5 | 16,3 | 10,8 | 100 |
| | | A/P/A | | | | | | | | | | |
| **Beispiel 6** | 63 | 10/30/30/20/10 | | 82 | 68 | 90 | 91 | 12,5 | 10,0 | 27,3 | 19,8 | 6 |
| | | A/HV/A/P/A | | | | | | | | | | |
| **Beispiel 7** | 100 | 50/40/10 | | 42 | 33 | 573 | 503 | 19 | 18,0 | 21,3 | 20,0 | 3 |
| | | A/P/A | | | | | | | | | | |
| **Vergleichsbeispiel 1** | 50 | 20/40/40 | | 150 | 150 | 120 | 100 | 15 | 14,0 | 30,0 | 32,0 | 6 |
| | | A/HV-B/A | | | | | | | | | | |
| **Vergleichsbeispiel 2** | 60 | 10/30/30/20/10 | | 63 | 62 | 83 | 87 | 9 | 7,3 | 19,9 | 17,4 | 5 |
| | | A/HV/A/A/P | | | | | | | | | | |

| | | | | | | | | | | | | |
|---|---|---|---|---|---|---|---|---|---|---|---|---|
| ¹⁾ WDD = Wasserdampfdurchlässigkeit | | | | | | | | | | | | |

Tabelle 1 zeigt, dass sich die erfindungsgemäß beschriebenen Nahrungsmittelhüllen, die nach den oben beschriebenen Verfahren hergestellt wurden, durch die mittlere Schicht (P), die anorganische oder/und organische Partikel enthält, deutlich von den üblichen Hüllen hinsichtlich ihrer Oberflächeneigenschaften unterscheiden.

Die Partikelgrößenverteilung der anorganischen Partikel wurde mit einem Lasergranulometer in verdünnter wässeriger Suspension bestimmt. Die Rauheitswerte wurden nach DIN 4762, ISO 4287/1 und DIN 4762/1E mit einem Perthometer S5P mit dem Perthen-Taster RHT6/50E 6110457 (Diamond) bei einem Cut-Off-Grade von 0,8 mm ermittelt. Der Mittenrauhwert Rₐ ist der arithmetische Mittelwert aller Abweichungen des Rauheitsprofils von der Mittellinie innerhalb der Gesamtmessstrecke. Die gemittelte Rauhtiefe R_{z} ist der Mittelwert aus den Einzelrauhtiefen von fünf aufeinanderfolgenden Einzelmessstrecken von je 5 mm Länge im Rauheitsprofil. Die maximale Rauhtiefe Rₘₐₓ ist die größte der fünf ermittelten Einzelrauhtiefen. Die Rauheitswerte wurden jeweils über 5 Messungen gemittelt. Je größer diese Werte sind, desto rauer ist die Oberfläche.

Die Glanzwerte wurden nach DIN 67530, ISO 2813 und ASTM D 523 bei einem Einstrahlwinkel von 60 ° mit dem Gerät Micro Gloss 60 der Fa. BYK Gardner bestimmt. Hierbei wurde das von der Oberfläche reflektierte Licht fotoelektrisch erfasst. Je kleiner die Glanzwerte sind, desto matter erscheint die Oberfläche.

Die Bestimmung der mechanischen Eigenschaften Reißfestigkeit, Reißdehnung, Sigma-5-Wert und Sigma-15-Wert erfolgte nach DIN 53 455 an Hüllenabschnitten mit einer Universalprüfmaschine. Die Messungen an den Proben des Beispiels 7 wurden an trockenen Proben, die Messungen an Proben von allen anderen Beispielen und Vergleichsbeispielen an nassen Proben vorgenommen, wobei alle Hüllenabschnitte eine Breite von 15 mm aufwiesen und wobei die Einspannlänge 50 mm betrug. Die Reißfestigkeit gibt die Festigkeit bis zum Beginn des Reißens an. Die Reißdehnung gibt parallel hierzu die Dehnung bis zum Beginn des Reißens an und ist auch ein Maß für die Sprödigkeit der Hülle. Die Sigma-5- und Sigma-15-Werte kennzeichnen die eingesetzte Kraft bis zu einer Dehnung der Hülle um 5 % bzw. um 15 %.

Die Reißfestigkeit aller Beispiele und Vergleichsbeispiele ist gut bis sehr gut. Sie ist - wenn man das näherungsweise mit Vergleichsbeispiel 1 in Beziehung setzt-aufgrund des Gehalts an grobkörnigen Partikeln deutlich herabgesetzt, aber dennoch sind bei dem Festigkeitsniveau der gemessenen Werte noch keine Probleme beim Füllen der Hüllen mit einer Nahrungsmittelmasse zu erwarten.

Die Reißdehnung aller Beispiele und Vergleichsbeispiele ist gut bis sehr gut. Sie ist - wenn man das näherungsweise mit Vergleichsbeispiel 1 in Beziehung setzt - aufgrund des Gehalts an grobkörnigen Partikeln deutlich herabgesetzt, aber dennoch sind bei dem Dehnungsniveau der gemessenen Werte noch keine Probleme beim Füllen der Hüllen mit einer Nahrungsmittelmasse zu erwarten. Der nicht verstreckte Blasschlauch des Beispiels 7 zeigt dagegen eine sehr hohe Reißdehnung aufgrund der geringen Orientierung der Molekülketten zueinander, d.h., dass die thermoplastischen Polymere weitgehend ungeordnet in der Folie vorliegen und dass die Kristallinität relativ gering ist.

Auch die Sigma-5- und Sigma-15-Werte sind alle gut bzw. sehr gut. Alle mechanischen Eigenschaften sind umso besser, je höher die Werte sind.

Die Bestimmung der Wasserdampfdurchlässigkeit (WDD) erfolgte nach DIN 53 122. Dabei wurde jeweils ein Hüllenabschnitt, der abdichtend über ein Trocknungsmittel enthaltendes Schälchen gespannt wurde, im Klimaschrank bei stehender Luft einseitig mit Luft einer relativen Feuchte von 85 % bei 23 °C beaufschlagt, wobei jeweils das Gewicht des gesamten Schälchens inklusive Hülle, Trockenmittel und abdichtendem Wachs vor und nach dem Aufenthalt im Klimaschrank bestimmt wurde.

Diese erfindungsgemäßen Hüllen sehen insbesondere einem Kollagendarm sehr ähnlich.

## Patentansprüche

1. Schlauchförmige, mehrschichtige, thermoplastische Nahrungsmittelhülle, die eine Außenschicht (Z), eine Innenschicht (I) und mindestens eine dazwischen liegende Schicht (P) umfaßt, **dadurch gekennzeichnet, dass** mindestens eine dazwischen liegende Schicht (P) mehr als 50 Gew.-% mindestens eines thermoplastischen Polymers und grobkörnige anorganische oder/und organische Partikel enthält, die mindestens eine Art grobkörniger Partikel mit einem mittleren Äquivalentkugeldurchmesser d₅₀ größer als 5 µm umfasst, und wobei die Oberfläche der Außenschicht (Z) oder/und der Innenschicht (I) eine gemittelte Rauhtiefe R_{z} von mindestens 5 µm aufweist, gemittelt über jeweils 5 Messungen.

2. Nahrungsmittelhülle nach Anspruch 1, **dadurch gekennzeichnet, dass** die grobkörnigen Partikel von mindestens einer dazwischen liegende Schicht (P) eine solche Verteilung und Häufigkeit aufweisen, dass durchschnittlich mindestens drei Partikel je mm² der äußeren oder/und der inneren Oberfläche einen solchen Durchmesser aufweisen und so in der Hülle eingelagert sind, dass sie zumindest teilweise aus den ebenen Partien der Oberfläche durch Aufwölbungen der Grundmasse um diese Partikel oder/und durch aus der Grundmasse herausstehende Partien der Partikel herausragen.

3. Nahrungsmittelhülle nach Anspruch 1 oder 2, **dadurch gekennzeichnet, dass** mindestens eine dazwischen liegende Schicht (P) mindestens 0,05 Vol.-% anorganische oder/und organische Partikel mit einem Äquivalentkugeldurchmesser von mindestens 10 µm oder mit einem Partikelvolumen von mindestens 524 µm³ enthält.

4. Nahrungsmittelhülle nach einem der vorstehenden Ansprüche, **dadurch gekennzeichnet, dass** die Gesamtheit der anorganischen oder/und organischen Partikel von mindestens einer dazwischen liegende schicht (P) oder zumindest ihre im wesentlichen isometrisch geformten Partikel eine Äquivalentkugeldurchmesserverteilung mindestens teilweise im Bereich zwischen 20 und 40 µm aufweisen.

5. Nahrungsmittelhülle nach einem der vorstehenden Ansprüche, **dadurch gekennzeichnet, dass** mindestens eine dazwischen liegende Schicht (P) mindestens 0,5 Gew.-% anorganische oder/und organische Partikel enthält.

6. Nahrungsmittelhülle nach einem der vorstehenden Ansprüche, **dadurch gekennzeichnet, dass** die anorganischen Partikel vorwiegend oder weitgehend aus Partikeln auf Basis von Aluminiumoxid, Carbonat, Phosphat, Siliciumoxid, Silicat, Sulfat, Gestein oder/und glasartiger Substanz bestehen.

7. Nahrungsmittelhülle nach einem der vorstehenden Ansprüche, **dadurch gekennzeichnet, dass** die organischen Partikel vorwiegend oder weitgehend aus Partikeln auf Basis von Polysacchariden, Proteinen oder/und hochtemperaturstabilen Kunststoffen bestehen.

8. Nahrungsmittelhülle nach einem der vorstehenden Ansprüche, **dadurch gekennzeichnet, dass** die Oberfläche der Außenschicht (Z) einen Glanzwert gemessen mit einem Gerät Micro Gloss 60 der Fa. BYK Gardner gemittelt über 5 Messungen von nicht mehr als 65 aufweist.

9. Nahrungsmittelhülle nach einem der vorstehenden Ansprüche, **dadurch gekennzeichnet, dass** sie neben der mindestens einen dazwischen liegenden Schicht (P) mindestens eine Schicht ausgewählt aus Schichten (A) mit einem Gehalt an thermoplastischer Substanz auf Basis von (Co-)Polyamid(en), Schichten (B) mit einem Gehalt an Polyolefin(en) und Schichten (C) mit einer Sperrwirkung für Sauerstoff und weitere Gase aufweist sowie gegebenenfalls zusätzlich auch mindestens eine Schicht (HV) als Haftvermiitler-Zwischenschicht oder/und als Haftvermittler-Innenschicht.

10. Nahrungsmittelhülle nach einem der vorstehenden Ansprüche, **dadurch gekennzeichnet, dass** mindestens eine dazwischen liegende Schicht (P) eine Schicht (A) mit einem Gehalt an thermoplastischer Substanz auf Basis von (Co-)Polyamid(en) ist.

11. Nahrungsmittelhülle nach einem der vorstehenden Ansprüche, **dadurch gekennzeichnet, dass** mindestens eine Schicht, insbesondere die Außenschicht (Z) oder/und die Innenschicht (I), jeweils mindestens ein Mattierungsmittel enthält.

12. Verfahren zur Herstellung einer Nahrungsmittelhülle nach einem der vorstehenden Ansprüche, **dadurch gekennzeichnet, dass** mindestens drei thermoplastische Massen hergestellt und bei einer Coextrusion erweicht oder/und zumindest partiell erschmolzen werden, wobei mindestens drei Schichten erzeugt werden, die zu einer einzigen Folie in Form einer nahtlosen, im wesentlichen schlauchförmigen Hülle verarbeitet werden und dass mindestens einer Masse, die zur Herstellung von einer Schicht (P) im mittleren Bereich des Schichtaufbaus zwischen der Außenschicht (Z) und der Innenschicht (I) verwendet wird, anorganische oder/und organische grobkörnige Partikel zugesetzt werden, bei denen zumindest eine Art Partikel eine mittlere Partikelgröße d₅₀ von mindestens 5 µm aufweist.

13. Verfahren nach Anspruch 12, **dadurch gekennzeichnet, dass** mindestens eine Schicht, insbesondere eine Schicht, die nicht grobkörnige Partikel aufweist, oder insbesondere eine mittlere Schicht, eine tragende Funktion und einen Gehalt an thermoplastischen Bestandteilen auf Basis von (Co-)Polyamid(en) von mehr als 50 Gew.-% aufweist.

14. Verfahren nach Anspruch 12 oder 13, **dadurch gekennzeichnet, dass** die grobkörnigen Partikel einer Masse nach dem Extrudieren primär in einer dünnwandigen Schicht der Hülle eingebaut sind und das Schichtenpaket um die grobkörnigen Partikel herum aufwölben.

15. Verfahren nach einem der Ansprüche 12 bis 14, **dadurch .gekennzeichnet, dass** die der Masse zugesetzten organischen Substanzen in Bezug auf den Temperaturverlauf des Extrudierverfahrens weitgehend oder gänzlich temperaturstabil sind.

16. Verfahren nach einem der Ansprüche 12 bis 15, **dadurch gekennzeichnet, dass** organische Partikel mit mindestens einem Plastifizierungsmittel zumindest teilweise plastifiziert und somit zumindest teilweise thermoplastisch gemacht werden, so dass die organischen Partikel zumindest teilweise mit mindestens einer Substanz der Grundmasse eine Mischphase bilden und dabei angelöst oder/und zumindest teilweise aufgelöst werden.

17. Verfahren nach einem der Ansprüche 12 bis 16, **dadurch gekennzeichnet, dass** die Hülle anschließend zu einem einseitig abgebundenen Abschnitt, zu einer Raffraupe, zu einer naturdarmähnlichen Form, insbesondere zu einem Kranzdarm oder zu einem Fettende, verarbeitet wird.

18. Verwendung der Nahrungsmittelhülle nach einem der Ansprüche 1 bis 11 als. Lebensmittelverpackung insbesondere für ein Milchprodukt oder für eine Wurstware, vorzugsweise als künstliche Wursthülle.

## Claims

1. A tubular, multilayer, thermoplastic food casing which comprises an external layer (Z), an internal layer (I) and at least one layer (P) situated therebetween, wherein at least one layer (P) situated therebetween comprises more than 50 % by weight of at least one thermoplastic polymer and comprises coarse-grain inorganic or/and organic particles, comprising at least one type of coarse-grain particle with a median equivalent spherical diameter d₅₀ greater than 5 µm, and where the average roughness depth R_{z} of the surface of the external layer (Z) or/and of the internal layer (I) is at least 5 µm, averaged in each case over 5 measurements.

2. The food casing as claimed in claim 1, wherein the distribution and frequency of the coarse-grain particles of at least one layer (P) situated therebetween is such that on average at least three particles per mm² of the exterior or/and of the interior surface have a diameter such that, and have been embedded in the casing in such a way that, they protrude at least to some extent from the flat parts of the surface by virtue of areas of upward curvature of the parent composition around said particles or/and by virtue of particle parts projecting out of the parent composition.

3. The food casing as claimed in claim 1 or 2, wherein at least one layer (P) situated therebetween comprises at least 0.05 % by volume of inorganic or/and organic particles with an equivalent spherical diameter of at least 10 µm or with a particle volume of at least 524 µm³.

4. The food casing as claimed in any of the preceding claims, wherein the entirety of the inorganic or/and organic particles of at least one layer (P) situated therebetween or at least the in essence isometrically shaped particles thereof have an equivalent spherical diameter distribution at least to some extent in the range from 20 to 40 µm.

5. The food casing as claimed in any of the preceding claims, wherein at least one layer (P) situated therebetween comprises at least 0.5 % by weight of inorganic or/and organic particles.

6. The food casing as claimed in any of the preceding claims, wherein the inorganic particles are composed predominantly or substantially of particles based on aluminum oxide, on carbonate, on phosphate, on silicon oxide, on silicate, on sulfate, on rock or/and on glassy substance.

7. The food casing as claimed in any of the preceding claims, wherein the organic particles are composed predominantly or substantially of particles based on polysaccharides, on proteins or/and on high-temperature-resistant plastics.

8. The food casing as claimed in any of the preceding claims, wherein the gloss value of the surface of the external layer (Z), measured with a micro-gloss 60 device from BYK Gardner, averaged over 5 measurements, is not more than 65.

9. The food casing as claimed in any of the preceding claims, wherein it has, alongside the at least one layer (P) situated therebetween, at least one layer selected from layers (A) with content of thermoplastic substance based on (co)polyamide(s), layers (B) with content of polyolefin(s) and layers (C) with a barrier effect for oxygen and for other gases, and also optionally has at least one layer (HV) as intermediate adhesion-promoter layer or/and as internal adhesion-promoter layer.

10. The food casing as claimed in any of the preceding claims, wherein at least one layer (P) situated therebetween is a layer (A) with content of thermoplastic substance based on (co)polyamide(s).

11. The food casing as claimed in any of the preceding claims, wherein at least one layer, in particular the external layer (Z) or/and the internal layer (I), in each case comprises at least one matting agent.

12. A process for the production of a food casing as claimed in any of the preceding claims, wherein at least three thermoplastic compositions are produced and, in a coextrusion process, are softened or/and at least partially melted, where at least three layers are produced which are processed to give a single foil in the form of a seamless, in essence tubular casing and that at least one composition, used for the production of a layer (P) in the middle region of the layer structure between the external layer (Z) and the internal layer (I), receives addition of inorganic or/and organic coarse-grain particles, of which at least one type of particle has a median particle size d₅₀ of at least 5 µm.

13. The process as claimed in claim 12, wherein at least one layer, in particular a layer which does not have coarse-grain particles, or in particular a middle layer, has a load-bearing function and more than 50 % by weight content of thermoplastic constituents based on (co)polyamide(s).

14. The process as claimed in claim 12 or 13, wherein the coarse-grain particles have been incorporated into a composition after extrusion primarily within a thin-walled layer of the casing, and the layer assembly curves upward around the coarse-grain particles.

15. The process as claimed in any of claims 12 to 14, wherein the organic substances added to the composition are substantially or entirely thermally stable in relation to the temperature profile of the extrusion process.

16. The process as claimed in any of claims 12 to 15, wherein organic particles are at least to some extent plasticized with at least one plasticizer and thus are rendered at least to some extent thermoplastic, so that the organic particles form, at least to some extent, a mixed phase with at least one substance of the parent composition and are thus solvated or/and at least to some extent dissolved.

17. The process as claimed in any of claims 12 to 16, wherein the casing is then processed to give a section tied off at one end, or to give a shirred stick, or to give a product similar to a natural skin, in particular to give a curved casing or to give the product known as a fat end.

18. The use of the food casing as claimed in any of claims 1 to 11 as food packaging in particular for a milk product or for a sausage product, preferably as synthetic sausage casing.

## Revendications

1. Enveloppe de denrées alimentaires thermoplastique tubulaire multicouche, qui comprend une couche externe (Z), une couche interne (I) et, entre elles, au moins une couche intermédiaire (P), **caractérisée en ce qu'**au moins une couche intermédiaire (P) contient plus de 50 % en poids d'au moins un polymère thermoplastique et des particules inorganiques et/ou organiques à gros grains, qui comprennent au moins un type de particule à gros grains ayant un diamètre sphérique équivalent d₅₀ plus grand que 5 µm, et dans laquelle la surface de la couche externe (Z) et/ou de la couche interne (I) présente une profondeur de rugosité de surface moyenne R_{z} d'au moins 5 µm, en moyenne sur respectivement 5 mesures.

2. Enveloppe de denrées alimentaires selon la revendication 1, **caractérisée en ce que** les particules à gros grains d'au moins une couche intermédiaire (P) présentent une distribution et une fréquence telles qu'en moyenne, au moins trois particules par mm² de la surface externe et/ou de la surface interne présentent un tel diamètre et soient imbriquées dans l'enveloppe de sorte qu'elles ressortent au moins en partie des portions unies de la surface à travers des renflements de la masse de base autour de ces particules et/ou à travers des portions des particules faisant saillie de la masse de base.

3. Enveloppe de denrées alimentaires selon la revendication 1 ou la revendication 2, **caractérisée en ce qu'**au moins une couche intermédiaire (P) contient au moins 0,05 % en volume de particules inorganiques et/ou organiques ayant un diamètre sphérique équivalent d'au moins 10 µm ou ayant un volume de particules d'au moins 524 µm³.

4. Enveloppe de denrées alimentaires selon l'une quelconque des revendications précédentes, **caractérisée en ce que** la totalité des particules inorganiques et/ou organiques d'au moins une couche intermédiaire (P) ou au moins leurs particules de forme sensiblement isométrique présentent une distribution de diamètre sphérique équivalent au moins en partie dans la plage entre 20 et 40 µm.

5. Enveloppe de denrées alimentaires selon l'une quelconque des revendications précédentes, **caractérisée en ce qu'**au moins une couche intermédiaire (P) contient au moins 0,5 % en poids de particules inorganiques et/ou organiques.

6. Enveloppe de denrées alimentaires selon l'une quelconque des revendications précédentes, **caractérisée en ce que** les particules inorganiques sont constituées principalement ou largement de particules à base d'oxyde d'aluminium, de carbonate, de phosphate, d'oxyde de silicium, de silicate, de sulfate, de roche et/ou de substance vitrée.

7. Enveloppe de denrées alimentaires selon l'une quelconque des revendications précédentes, **caractérisée en ce que** les particules organiques sont constituées principalement ou largement de particules à base de polysaccharides, de protéines et/ou de matériaux synthétiques stables aux températures élevées.

8. Enveloppe de denrées alimentaires selon l'une quelconque des revendications précédentes, **caractérisée en ce que** la surface de la couche externe (Z) présente une valeur de brillance mesurée avec un appareil Micro Gloss 60 de la société BYK Gardner en moyenne sur 5 mesures de pas plus de 65.

9. Enveloppe de denrées alimentaires selon l'une quelconque des revendications précédentes, **caractérisée en ce qu'**elle présente, à côté d'au moins une couche intermédiaire (P), au moins une couche choisie parmi des couches (A) ayant une teneur en substance thermoplastique à base de (co-)polyamide(s), des couches (B) ayant une teneur en polyoléfine(s) et des couches (C) ayant une effet bloquant pour l'oxygène et d'autres gaz ainsi qu'éventuellement aussi au moins une couche (HV) comme couche intermédiaire d'adhésif et/ou comme couche interne d'adhésif.

10. Enveloppe de denrées alimentaires selon l'une quelconque des revendications précédentes, **caractérisée en ce qu'**au moins une couche intermédiaire (P) est une couche (A) ayant une teneur en substance thermoplastique à base de (co-)polyamide(s).

11. Enveloppe de denrées alimentaires selon l'une quelconque des revendications précédentes, **caractérisée en ce qu'**au moins une couche, en particulier la couche externe (Z) et/ou la couche interne (I), contient respectivement au moins un agent de matage.

12. Procédé de fabrication d'une enveloppe pour denrées alimentaires selon l'une quelconque des revendications précédentes, **caractérisé en ce qu'**au moins trois masses thermoplastiques sont fabriquées et, lors d'une extrusion, ramollies et/ou au moins en partie fondues, dans lequel on produit au moins trois couches qui sont transformées en un seul film sous la forme d'une enveloppe sans couture sensiblement tubulaire et **en ce qu'**on ajoute au moins à une masse, qui est utilisée pour la fabrication d'une couche (P) dans la zone centrale de la structure feuilletée entre la couche externe (Z) et la couche interne (I), des particules à gros grains inorganiques et/ou organiques, dans lesquelles au moins un type de particule présente un calibre particulaire moyen d₅₀ d'au moins 5 µm.

13. Procédé selon la revendication 12, **caractérisé en ce qu'**au moins une couche, en particulier une couche qui ne présente pas de particules à gros grains, ou en particulier une couche centrale, présente une fonction de support et une teneur en composants thermoplastiques à base de (co-)polyamide(s) de plus de 50 % en poids.

14. Procédé selon la revendication 12 ou la revendication 13, **caractérisé en ce que** les particules à gros grains d'une masse sont, après extrusion, intégrées principalement à une couche à paroi mince de l'enveloppe et cintrent le paquet de couches autour des particules à gros grains.

15. Procédé selon l'une quelconque des revendications 12 à 14, **caractérisé en ce que** les substances organiques ajoutées à la masse sont largement ou totalement stables par rapport à l'évolution des températures au cours du processus d'extrusion.

16. Procédé selon l'une quelconque des revendications 12 à 15, **caractérisé en ce que** les particules organiques sont au moins en partie plastifiées par au moins un agent plastifiant et donc rendues au moins en partie thermoplastiques si bien que les particules organiques forment au moins en partie avec au moins une substance de la masse de base une phase mixte et sont en l'occurrence corrodées et/ou au moins en partie dissoutes.

17. Procédé selon l'une quelconque des revendications 12 à 16, **caractérisé en ce que** l'enveloppe est ensuite convertie en une section durcie d'un côté, une chenille comprimée, une forme similaire à celle d'un boyau naturel, en particulier un boyau coronaire ou un bout de graisse.

18. Utilisation de l'enveloppe pour denrées alimentaires selon l'une quelconque des revendications 1 à 11 comme emballage de denrées alimentaires, en particulier pour un produit lacté ou pour produits de charcuterie, de préférence comme enveloppe artificielle pour saucisses.
